# EUROPÄISCHE PATENTSCHRIFT

(11) **EP 3 388 286 B1**
(45) Veröffentlichungstag und Bekanntmachung des Hinweises auf die Patenterteilung: **11.12.2019**
(21) Anmeldenummer: 18152960.3
(22) Anmeldetag: 23.01.2018
(51) Int. Cl.: B60K 35/00, B60Q 3/78, B60Q 9/00

(54) **VERFAHREN ZUR ERZEUGUNG EINES LICHTERSCHEINUNGSBILDES IM INNENRAUM EINES KRAFTFAHRZEUGS SOWIE KRAFTFAHRZEUG ZUR DURCHFÜHRUNG DES VERFAHRENS**
METHOD FOR GENERATING A LIGHT APPEARANCE IMAGE IN THE INTERIOR OF A MOTOR VEHICLE AND MOTOR VEHICLE FOR CARRYING OUT THE METHOD
PROCÉDÉ DE GÉNÉRATION D'UNE IMAGE PAR APPARENCE DE LA LUMIÈRE DANS L'ESPACE INTÉRIEUR D'UN VÉHICULE AUTOMOBILE AINSI QUE VÉHICULE AUTOMOBILE DESTINÉ À LA MISE EN UVRE DUDIT PROCÉDÉ

(30) Priorität: 11.04.2017 DE 102017003511; 11.04.2017 DE 102017003510; 07.12.2017 DE 102017222174
(43) Veröffentlichungstag der Anmeldung: 17.10.2018
(60) Teilanmeldung: 19168249.1
(73) Patentinhaber: Volkswagen Aktiengesellschaft, 38440 Wolfsburg (DE)
(72) Erfinder: Parada, Myriam, 10997 Berlin/Kreuzberg (DE); Helmich, Ontje, 14059 Berlin (DE); Wilhelm, Valentina, 38102 Braunschweig (DE)

(56) Entgegenhaltungen:
- EP-A1- 2 650 162
- DE-A1-102008 064 022
- DE-A1-102009 053 707
- DE-A1-102010 018 336
- DE-A1-102010 020 566
- DE-A1-102013 016 250
- DE-A1-102013 018 784
- DE-A1-102013 225 033
- DE-A1-102015 210 887
- US-A1- 2015 287 325

## Beschreibung

Die Erfindung betrifft ein Verfahren zur Erzeugung eines Lichterscheinungsbildes im Innenraum eines Kraftfahrzeugs. Die Erfindung betrifft auch ein Kraftfahrzeug zur Durchführung des Verfahrens.

Ein derartiges Verfahren und ein ebensolches Kraftfahrzeug sind aus der DE 10 2013 017 625 A1 bekannt geworden. Konkret wird in diesem Dokument ein Verfahren zum Betreiben einer Fahrerassistenzeinrichtung eines Kraftfahrzeugs offenbart. Bei Erkennen wenigstens einer Umfeldgröße im Umfeld des Kraftfahrzeugs anhand eines Umfeldsensors und/oder anhand von Daten einer Navigationseinrichtung werden Farbparameter einer durch Scheinwerfer abgegebenen Strahlung eingestellt. Als Umfeldgrößen können beispielsweise eine Bebauung einer Fahrbahn oder auch ein Objekt auf der Fahrbahn erfasst werden. Zusätzlich wird vorgeschlagen, dass auch ein Farbparameter einer mit einer Innenraumbeleuchtung des Kraftfahrzeugs abgegebenen Strahlung in Abhängigkeit von der erkannten Umfeldgröße eingestellt wird.

Aus der DE 10 2013 018 784 A1 ist ein Fahrzeug mit wenigstens einer Beleuchtungsvorrichtung mit einer längsförmigen Beleuchtungseinrichtung zum Erzeugen eines Leuchtstreifens entlang einer vorgegebenen Strecke der Beleuchtungseinrichtung bekannt. Dabei ist ein erster Abschnitt der Beleuchtungseinrichtung am Interieur des Fahrzeugs und ein zweiter Abschnitt der Beleuchtungseinrichtung an der Außenseite des Fahrzeugs angeordnet. Die Beleuchtungsvorrichtung ist dazu eingerichtet, einen gleichartigen Leuchtstreifen entlang einer Strecke des ersten sowie des zweiten Abschnitts der Beleuchtungseinrichtung zu erzeugen. Die Beleuchtungseinrichtung kann dabei über eine Sprachsteuerung eingestellt werden.

Aus der DE 10 2010 018 336 A1 ist ein Beleuchtungssystem für einen Innenraum eines Fahrzeugs bekannt, mit einer ersten und einer zweiten Beleuchtungsvorrichtung, die dazu ausgebildet sind, den Innenraum zu beleuchten und in Abhängigkeit von Signalen Anzeigefunktionen zu übernehmen, wobei die erste Beleuchtungsvorrichtung an einem Armaturenbrett und die zweite Beleuchtungsvorrichtung an einer Türinnenseite des Fahrzeugs angeordnet ist.

Aus der DE 10 2009 053 707 A1 ist eine Vorrichtung zur Anzeige eines durch Sensoren erfassten Hindernisses im Bewegungsbereich eines Nutzfahrzeugs bekannt, wobei eine Reihe von Leuchtelementen, die sich im Wesentlichen über die Breite des Nutzfahrzeugs erstrecken und in einem Übergangsbereich zwischen einer Windschutzscheibe und einem Armaturenbrett angeordnet sind, wobei die Leuchtelemente abschnittsweise und in Abhängigkeit der durch den jeweiligen Sensor erfassten räumlichen Lage des Hindernisses im Abtastbereich schaltbar sind. Dabei kann die abschnittsweise Schaltung der einzelnen Leuchtelemente mit einem akustischen Signal verbunden sein. Das akustische Signal kann eine rechnergesteuerte Stimme sein, die den Fahrer auf ein Hindernis und die Position des Hindernisses hinweist.

Ähnliche Vorrichtungen sind aus der DE 10 2013 225 033 A1, DE 10 2008 064 022 A1 und DE 10 2010 020 566 A1 bekannt. Eine weitere Warnvorrichtung ist aus der US 2015/0287325 A1, EP 2 650 162 A1 und DE 10 2013 016 250 A1 bekannt. Die DE 10 2015 210 887 A1 offenbart ein Verfahren zum Anzeigen einer Beschleunigung in einem Fahrzeug.

Angesichts dieses Standes der Technik liegt der vorliegenden Erfindung die Aufgabe zu Grunde, ein alternatives Verfahren zur Erzeugung eines Lichterscheinungsbildes im Innenraum eines Kraftfahrzeugs bereitzustellen, welches eine einfache und gut verständliche, visuelle Unterstützung eines Fahrzeuginsassen bereitstellt. Insbesondere soll es den Fahrzeugführer in vielen Fahrsituationen unterstützen, ohne diesen jedoch abzulenken.

Vorliegende Aufgabe wird mit den Merkmalen von Patentanspruch 1 gelöst
Des Weiteren liegt der Erfindung die Aufgabe zu Grunde, ein geeignetes Kraftfahrzeug zur Durchführung des Verfahrens bereitzustellen. Diese Aufgabe wird mit den Merkmalen von Patentanspruch 19 gelöst.

Vorteilhafte Ausbildungen beziehungsweise Weiterbildungen sind den jeweils abhängigen Ansprüchen entnehmbar.

Die Erfindung geht aus von einem Verfahren zur Erzeugung eines Lichterscheinungsbildes im Innenraum eines Kraftfahrzeugs. Dabei wird das Lichterscheinungsbild zumindest auch in Abhängigkeit von als Trigger wirkenden Betriebszuständen des Kraftfahrzeugs und/oder Umfeldgrößen im Umfeld des Kraftfahrzeugs erzeugt. Die als Trigger wirkenden Betriebszustände des Kraftfahrzeugs können beispielsweise durch Fahrerassistenzsysteme hervorgerufen sein.

Der Begriff der Fahrassistenzsysteme soll grundsätzlich solche Systeme umfassen, die der Fahrsicherheit, dem Komfort, der Unterhaltung und/oder der Kommunikation eines Fahrzeuginsassen dienen. Beispielhaft für Fahrassistenzsysteme in diesem Sinne sind eine automatische Distanzregelung (ACC), ein Umfeldbeobachtungssystem (Front Assist), ein Spurhalteassistent (Lane Assist), ein Spurwechselassistent (Side Assist), eine Einparkhilfe (Park Assist), ein Navigationssystem und ein Infotainmentsystem zu nennen.

Umfeldgrößen im Umfeld des Kraftfahrzeugs können beispielsweise durch Verkehrshindernisse, aber auch durch die Beschaffenheit der Fahrbahn (Eis, Schnee, Regen) gebildet sein.

Die Erfindung schlägt nun vor, dass das Lichterscheinungsbild zumindest im Bereich des Cockpits vom Kraftfahrzeug in Form einer horizontal ausgerichteten, linienartigen Animation erzeugt wird.

Hierdurch werden optimale Voraussetzungen dafür geschaffen, dass das Lichterscheinungsbild einfach und gut verständlich gestaltet werden kann und darüber hinaus dezent ist. Das Lichterscheinungsbild lenkt den Fahrzeugführer somit nicht ab, sondern unterstützt diesen beim Fahren auf angenehme und zurückhaltende Weise.

Die Animation kann beispielsweise als Ein-/Ausblendung einer Lichtlinie, deren Bewegung nach rechts/links, durch eine Verbreiterung oder Verkleinerung oder durch ein horizontales Wackeln der Lichtlinie gebildet sein. Bevorzugte Animationen sollen in der Figurenbeschreibung noch detaillierter beschrieben werden.

Dabei erstreckt sich das Lichterscheinungsbild zumindest über einen Großteil der Breite des Cockpits oder wird zumindest über einen Großteil der Breite des Cockpits entlang bewegt. Dies trägt sehr zu einer guten Wahrnehmung und zu einem guten Verständnis für den Fahrzeuginsassen dar.

Zudem wird dadurch auch die Flexibilität in den Gestaltungsmöglichkeiten des Lichterscheinungsbildes erhöht.

Weiter wird das Lichterscheinungsbild als visuelle Begleitung einer Spracheingabe eines Fahrzeuginsassen und optional einer fahrzeugseitigen Sprachausgabe erzeugt. Hierdurch kann ein sogenannter Sprachassistent zur Verfügung gestellt werden, dem der Fahrzeuginsasse Befehle geben und mit dem der Fahrzeuginsasse kommunizieren kann. Dem Sprachassistenten kann somit eine virtuelle "Persönlichkeit" mit eigenem Charakter verliehen werden. Hierdurch fühlt sich die Interaktion mit dem Kraftfahrzeug natürlich und persönlich an. Wie das Lichterscheinungsbild für den Sprachassistenten im Einzelnen vorteilhaft gestaltet werden kann, soll ebenfalls in der Figurenbeschreibung näher erläutert werden.

Eine Personalisierung des Sprachassistenten, wie zuvor erwähnt, wird noch intensiviert, wenn das Lichterscheinungsbild vor demjenigen Fahrzeuginsassen erzeugt oder nach Erzeugung zu demjenigen Fahrzeuginsassen hinbewegt wird, der die Spracheingabe abgibt oder abgegeben hat, wobei der als Trigger wirkende Betriebszustand von einem fahrzeugseitigen Spracherkennungssystem stammt.

Sehr zweckmäßig ist es beispielsweise, das Lichterscheinungsbild im Bereich einer Scheibenwurzel der Windschutzscheibe zu erzeugen. Dieser Erzeugungsort gewährleistet, dass der Fahrzeugführer in seinem primären Sichtbereich in keiner Weise beeinträchtigt wird, das Lichterscheinungsbild jedoch wahrgenommen werden kann. Animationen werden dabei quasi auf einer eindimensionalen Fläche abgespielt, wodurch richtungsweisende Informationen durch das Lichterscheinungsbild besonders leicht und verständlich dargestellt werden können.

Alternativ ist es denkbar, dass das Lichterscheinungsbild im Bereich einer Instrumententafel und zusätzlich im Bereich einer Türverkleidung beider Vordertüren des Kraftfahrzeugs erzeugt wird. Hierdurch ergibt sich der Vorteil, dass eine zweidimensionale Ausprägung der Animationen möglich ist. So können Animationen von rechts nach links, von links nach rechts und/oder auch zum Fahrer zulaufend oder von diesem weglaufend realisiert werden.

Gleichermaßen ist es einer Personalisierung förderlich, wenn das Lichterscheinungsbild in unterschiedlichen Animationen erzeugt wird oder erzeugbar ist. Jede Animation ist jeweils einem bestimmten Trigger zugeordnet, das heißt, jede Animation wird aufgrund eines bestimmten Triggers gestartet.

So kann eine sehr gute Personalisierung dann erzielt werden, wenn das Spracherkennungssystem wenigstens Trigger zu Betriebszuständen "aktivieren", "zuhören", "verarbeiten", "ausgeben", "bestätigen", "verneinen", "freuen", "stand by", "hinweisen", "warten", "deaktivieren" und "zuzwinkern" erzeugen kann. Wie dadurch ausgelöste Animationen im Detail aussehen können, wird später in der Figurenbeschreibung näher erläutert.

Eine andere Weiterbildung des Verfahrens schlägt vor, dass das Lichterscheinungsbild zur visuellen Unterstützung einer Welcome- und/oder Goodbye-Funktion des Kraftfahrzeugs erzeugt wird. Auf diese Weise kann eine Inszenierung dieser Funktionen spürbar verbessert werden.

Unter einer *Welcome-Funktion* soll eine solche Funktion verstanden werden, die das Kraftfahrzeug in den fahrbereiten Zustand bringt. Dies kann beispielsweise dadurch geschehen, dass der Fahrzeugführer nach dem Anstellen der Zündung die Bremse tritt und die Fahrstufe "D" (Fahren) einlegt.

Unter einer *Goodbye-Funktion* ist eine derartige Funktion zu verstehen, bei der der Fahrzeugführer seine Fahrt beendet hat und das Fahrzeug auf den Stillstand vorbereitet. Dies kann beispielsweise durch Auswahl der Fahrstufe "P" (Parken) erfolgen.

Eine optische Aufwertung einer Coming-Home- und/oder Leaving-Home-Funktion des Kraftfahrzeugs kann dadurch erzielt werden, indem das Lichterscheinungsbild auch zur visuellen Unterstützung einer Coming-Home- und/oder Leaving-Home-Funktion des Kraftfahrzeugs erzeugt wird. Dabei soll unter *Coming Home* eine solche Funktion verstanden werden, bei der beim Verlassen des Fahrzeugs das Abblendlicht, die Umfeldleuchten in den Außenspiegelgehäusen, das Schlusslicht der Heckleuchten und die Kennzeichenbeleuchtung verzögert ausgeschaltet werden. So kann die Fahrzeugaußenbeleuchtung genutzt werden, um bei Dunkelheit für Fahrzeuginnsassen den Weg zur Haustür beziehungsweise den Weg zum Fahrzeug zu beleuchten.

Unter *Leaving Home* ist hingegen eine Funktion zu verstehen, bei der die genannten Beleuchtungsvorrichtungen eingeschaltet werden, wenn der Fahrer mit der Fernbedienung die Verriegelung der Türen öffnet. Dies kann dazu genutzt werden, um bei Dunkelheit den Weg zum Fahrzeug zu beleuchten.

In einer anderen Weiterbildung kann das Lichterscheinungsbild zur visuellen Unterstützung einer Bremsaufforderung eines Fahrerassistenzsystems erzeugt werden. Das Fahrerassistenzsystem kann beispielsweise ein Umfeldbeobachtungssystem (Front Assist) sein, welches mittels eines Sensors kritische Abstandssituationen erfasst und den Fahrer bei kritischen Abstandssituationen hilft, den Anhalteweg zu verkürzen. Es ist auch denkbar, dass die Bremsaufforderung von einer Einparkhilfe stammt.

In einer anderen Ausbildung der Erfindung wird vorgeschlagen, dass das Lichterscheinungsbild zur visuellen Unterstützung eines Fahrstufenwechsels, beispielsweise eines automatischen Getriebes erzeugt wird. So ist denkbar, dass eine Animation erzeugt wird, wenn der Fahrstufen-Wählhebel von anderen Stellung in die Fahrstellung (D) oder in die Rückfahrstellung (R) gewechselt wird. Dies erleichtert dem Fahrzeugführer die Orientierung, in welcher Fahrstufe er sich gerade befindet, ohne auf die Anzeige des Wählhebels schauen zu müssen.

Um die Aussagekraft der Instruktionen eines Navigationssystems zu verstärken, ist es von Vorteil, wenn das Lichterscheinungsbild zur visuellen Unterstützung einer Anweisung eines Navigationssystems erzeugt wird.

Beispielsweise ist es in einer möglichen Weiterbildung der Erfindung sehr von Vorteil, wenn das Lichterscheinungsbild zur visuellen Unterstützung eine Spurwechselanweisung erzeugt wird. Auf diese Weise kann ein Fahrzeugführer noch intensiver auf einen notwendigen Spurwechsel hingewiesen werden.

Es kann gemäß einer anderen Weiterbildung auch zweckmäßig sein, wenn das Lichterscheinungsbild zur visuellen Unterstützung einer Abbiege-Anweisung erzeugt wird. Auch auf diese Weise kann dann das Verfahren dazu beitragen, dass der Fahrzeugführer rechtzeitig die Notwendigkeit eines Abbiegens erkennt und die gewünschte Route auch wirklich fährt.

Wenn das Lichterscheinungsbild zur visuellen Unterstützung eines eingehenden Telefonanrufs erzeugt wird, kann das versehentliche Verpassen eines Telefonanrufs vermieden werden.

Um einen laufenden Ladevorgang für den Fahrzeugführer und auch für außenstehende Dritte besser sichtbar zu machen, ist es zweckmäßig, wenn das Lichterscheinungsbild zur visuellen Unterstützung eines elektrischen Ladevorgangs einer Traktionsbatterie erzeugt wird.

Nach einer anderen Weiterbildung des Verfahrens wird vorgeschlagen, dass das Lichterscheinungsbild zur visuellen Unterstützung einer Warnmeldung für eine Geschwindigkeitsübertretung erzeugt wird. Hierdurch wird eine zusätzliche Möglichkeit geschaffen, dass der Fahrer auf eine Geschwindigkeitsübertretung hingewiesen wird und rechtzeitig diese korrigieren kann.

Wenn das erfindungsgemäße Verfahren eine Vielzahl von möglichen Animationen aufweist, die jeweils durch einen bestimmten Trigger (Auslöser) ausgelöst werden, so ist es gemäß einer sehr zweckmäßigen Ausbildung des Erfindungsgedankens denkbar, dass jedem einer bestimmten Animation zugeordneten Trigger eine bestimmte Priorität zugewiesen wird. Dabei führt der Eintritt eines Triggers mit einer höheren Priorität als ein für eine laufende Animation ursächlicher Trigger zu einem Ende der laufenden Animation und zu einem Start der dem höher priorisierten Trigger zugeordneten Animation.

Um dennoch bei einer notwendigen Beendigung einer Animation das harmonische Erscheinungsbild für den Fahrzeuginsassen nicht zu stören, wird gemäß einer anderen Weiterbildung vorgeschlagen, dass bei Auftreten eines höher priorisierten aber zeitunkritischen Triggers eine laufende Animation nur in einer Teilanimation durchgeführt wird. Dabei wird die Animation jedoch mit ihrem üblichen Ausblendverhalten (Fade Out) beendet, bevor die dem höherpriorisierten Trigger zugeordnete Animation gestartet wird.

Es ist jedoch auch denkbar, dass höher priorisierte und gleichzeitig zeitkritische Trigger auftreten. In einem solchen Fall ist es zur sachgerechten Abarbeitung und Erzeugung der richtigen Animation sehr zweckmäßig, wenn bei Auftreten eines höher priorisierten und zeitkritischen Triggers eine laufende Animation sofort abgebrochen wird. Der Übergang zu der dem höher priorisierten Trigger zugeordneten Animation erfolgt dann durch eine generische Blende.

Das generische Ausblendverhalten ist dabei also nicht animationsspezifisch, also auf die zuvor abgebrochene Animation abgestimmt und in der Regel auch sehr kurz.

Wie bereits erwähnt soll mit der Erfindung auch ein Kraftfahrzeug unter Schutz gestellt werden, welches zur Durchführung des Verfahrens geeignet ist.

Ein derartiges Kraftfahrzeug weist wenigstens eine Beleuchtungsvorrichtung im Innenraum auf, ferner eine Umfelderfassungseinrichtung zur Erfassung des Fahrzeugumfeldes. Die Umfelderfassungseinrichtung kann beispielsweise Sensoren umfassen, wie Ultraschall-, Lidar- oder auch Radarsensoren. Auch Kameras sind denkbar.

Ferner weist das Kraftfahrzeug wenigstens ein Fahrerassistenzsystem auf und ein Spracherkennungssystem zur sprachgeführten Bedienung von Fahrzeugkomponenten. Wenigstens eine Auswerte- und Steuereinrichtung zur Ansteuerung der Beleuchtungsvorrichtung ist vorhanden. Dabei ist die Beleuchtungsvorrichtung von der Auswerte- und Steuereinrichtung zumindest in Abhängigkeit von Betriebszuständen des Spracherkennungssystems, von Daten der Umfelderfassungseinrichtung und/oder des wenigstens einen Fahrerassistenzsystems ansteuerbar oder wird dadurch angesteuert. Die Beleuchtungsvorrichtung ist insbesondere als linienartige Lichtleiste mit einer Vielzahl von dicht nebeneinander angeordneten Leuchtmitteln ausgebildet. Die Lichtleiste erstreckt sich im Bereich des Cockpits über die gesamte oder nahezu gesamte Breite des Innenraums. Die Leuchtmittel sind vorzugsweise als RGB-Leuchtdioden ausgebildet, welche Licht in beliebigen Farben aussenden können. Der Abstand der Leuchtmittel zueinander kann vorzugsweise in etwa 8 bis 22 mm betragen.

Auf diese Weise kann das Verfahren gut mit dem Kraftfahrzeug durchgeführt werden.

Zur Realisierung einer eindimensionalen Anzeige ist es ausreichend, wenn die Beleuchtungsvorrichtung in der Scheibenwurzel der Windschutzscheibe angeordnet ist. Dies ist mit einfachen Mitteln und kostengünstig realisierbar. Zudem wird somit das primäre Sichtfeld des Fahrzeugführers nicht beeinträchtigt, aber dennoch eine gute Wahrnehmbarkeit erzielt.

Alternativ ist auch denkbar, dass die Beleuchtungsvorrichtung im Bereich einer Instrumententafel angeordnet ist und sich zusätzlich beidseitig der Instrumententafel zumindest im Bereich von Türverkleidungen der Vordertüren in Richtung des Fahrzeughecks erstreckt. Auf diese Weise kann eine dreidimensionale Anzeige von Animationen durch das Verfahren realisiert werden, die auf den Fahrzeugführer zuzulaufen oder von ihm wegzulaufen scheint.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich.

Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht immer maßstabsgetreu. In manchen Figuren können Proportionen übertrieben dargestellt sein, um Merkmale eines Ausführungsbeispiels deutlicher hervorheben zu können.

Es zeigen, jeweils schematisch
- Fig. 1: ein zur Durchführung des Verfahrens hergerichtetes Kraftfahrzeug, in einer ersten Ausführungsform,
- Fig. 2: ein zur Durchführung des Verfahrens hergerichtetes Fahrzeug, in einer zweiten Ausführung,
- Fig. 3: ein möglicher Verfahrensablauf in Zusammenhang mit Betriebszuständen eines Spracherkennungssystems,
- Fig. 4 bis 15: durch Ansteuerung von Leuchtmitteln der Beleuchtungsvorrichtung erzielbare Animationen in Zusammenhang mit dem Betriebszustand des Spracherkennungssystems,
- Fig. 16: eine Animation, getriggert durch den Zustand der Betriebsbremse,
- Fig. 17 und 18: Animationen, getriggert durch die Position des Fahrstufen-Wählhebels und/oder durch den Betriebszustand der Betriebsbremse,
- Fig. 19: eine Animation, getriggert durch den Zustand eines ACC-, PDC- oder Front Assist-Systems,
- Fig. 20: eine Animation, getriggert durch die Position des Fahrstufen-Wählhebels,
- Fig. 21: eine Animation, getriggert durch den Betriebszustand der Feststellbremse,
- Fig. 22 und 23: Animationen, getriggert durch die Position des Fahrstufen-Wählhebels,
- Fig. 24: eine Animation, getriggert durch einen Wartezustand des Kraftfahrzeugs (Stand-By),
- Fig. 25: eine Animation, getriggert durch den Betriebszustand eines Infotainmentsystems (eingehender Telefonanruf),
- Fig. 26 bis 29: Animationen, getriggert durch den Betriebszustand eines Navigationssystems,
- Fig. 30: eine Animation, getriggert durch den Betriebszustand eines Batterieladesystems,
- Fig. 31 und 32: Animationen, getriggert durch den Verriegelungszustand des Kraftfahrzeugs,
- Fig. 33 und 34: Tabellen zur Erläuterung unterschiedlicher Welcome-Szenarien des Kraftfahrzeugs und
- Fig. 35 und 36: die Darstellung der Verfahrensweise bei Eingang von Triggern mit unterschiedlichen Prioritäten.

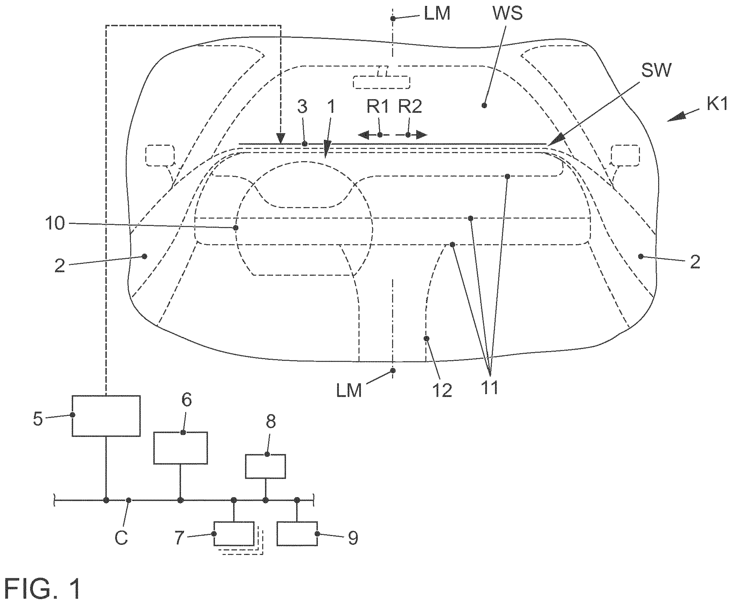

In der Fig. 1 ist ein Kraftfahrzeug K1 dargestellt, welches zur Durchführung des erfindungsgemäßen Verfahrens hergerichtet ist. Das Kraftfahrzeug K1 ist im Bereich eines Cockpits 1 ersichtlich. Das Cockpit 1 umfasst eine Instrumententafel 11, an die beidseitig jeweils eine Türverkleidung 2 von Vordertüren angrenzt. Unterhalb der Instrumententafel 11 erstreckt sich eine Mittelkonsole 12 in üblicher Weise. Ebenfalls noch dargestellt ist ein Lenkrad 10. Mit LM ist eine Längsmittenebene des Kraftfahrzeugs K1 beziffert.

Des Weiteren ist eine Beleuchtungsvorrichtung 3 im Bereich einer Scheibenwurzel SW der Windschutzscheibe WS vorhanden. Die Scheibenwurzel SW bildet den Übergangsbeziehungsweise Grenzbereich zwischen der Windschutzscheibe WS und der Instrumententafel 11.

Es ist ersichtlich, dass sich die Beleuchtungsvorrichtung 3 streifen- oder linienartig über die gesamte Breite oder zumindest nahezu über die gesamte Breite der Windschutzscheibe WS erstreckt. Vorzugsweise wird durch die Beleuchtungsvorrichtung 3 eine in etwa zwei bis drei Millimeter hohe Linie gebildet.

Konkret besteht die Beleuchtungsvorrichtung 3 aus einer Vielzahl dicht horizontal nebeneinander angeordneter Leuchtmittel, vorzugsweise Leuchtdioden (nicht näher dargestellt). Die Leuchtdioden sind vorzugsweise als sogenannte RGB-Leuchtdioden ausgebildet, welche Licht in beliebigen Farben aussenden können.

Die Beleuchtungsvorrichtung 3 beziehungsweise deren einzelne Leuchtmittel sind über eine Auswerte- und Steuereinrichtung 5 derart ansteuerbar, dass die Leuchtmittel der Beleuchtungsvorrichtung 3 Licht in verschiedenen Farben und/oder Lichterscheinungsbilder in Form von Animationen ausstrahlen. Wie die Beleuchtungsvorrichtung 3 durch die Auswerte- und Steuereinrichtung 5 angesteuert wird, hängt von Betriebszuständen des Kraftfahrzeugs K1 ab, beispielsweise vom Verriegelungszustand, vom Fahrbereitschaftszustand, usw. Die Auswerte- und Steuereinrichtung 5 wird auch tätig in Abhängigkeit von Betriebszuständen von Fahrassistenzsystemen des Kraftfahrzeugs K1. Die Fahrerassistenzsysteme können beispielsweise ein Navigationssystem, ein AAC-System (automatische Abstandsregelung), ein PDC-System (Einparkhilfe) und/oder ein Infotainmentsystem umfassen. Ferner steuert die Auswerte- und Steuereinrichtung 5 die Beleuchtungsvorrichtung 3 in Abhängigkeit von Umfeldgrößen im Umfeld des Kraftfahrzeugs K1 an. Die Umfeldgrößen können beispielsweise durch Kollisionsobjekte, durch die Fahrbahnbeschaffenheit, durch die Umgebungstemperatur und/oder durch die Umgebungshelligkeit gegeben sein.

Daher ist die Auswerte- und Steuereinrichtung 5 über ein Datenbus C mit einer Umfelderfassungseinrichtung 6, mit diversen Fahrerassistenzsystemen 7, mit einem Betriebsdatenerfassungssystem 8 und mit einem Spracherkennungssystem 9 (Sprachassistent) signaltechnisch verbunden. Sowohl die Umfelderfassungseinrichtung 6 als auch die Betriebsdatenerfassungseinrichtung 8 weisen geeignete Sensoren auf, mit denen das Umfeld beziehungsweise mit denen Betriebsdaten erfasst werden können. Durch Sensoren der Betriebsdatenerfassungseinrichtung 8 können beispielsweise die Fahrgeschwindigkeit, die Motordrehzahl und der Kraftstoffvorrat erfasst werden.

Das Spracherkennungssystem 9 ist als eine Art Sprachassistent ausgebildet, und hilft dem Fahrzeugführer beziehungsweise anderen Fahrzeuginsassen auf Grund von Spracheingaben Bedienungen diverser Komponenten am Kraftfahrzeug K2 vorzunehmen. Diese Bedienungen können beispielsweise Audioeinstellungen, Klimaeinstellungen und/oder auch Kommunikationseinstellungen betreffen.

Beim Kraftfahrzeug K1 ist die Beleuchtungsvorrichtung 3 als in etwa horizontal ausgerichtete Lichtleiste ausgebildet, welche Lichterscheinungsbilder in Form von horizontalen, in Richtungen R1 und/oder R2 verlaufenden, linienartigen Animationen erlaubt. Hierbei erfolgt also eine eindimensionale Darstellung.

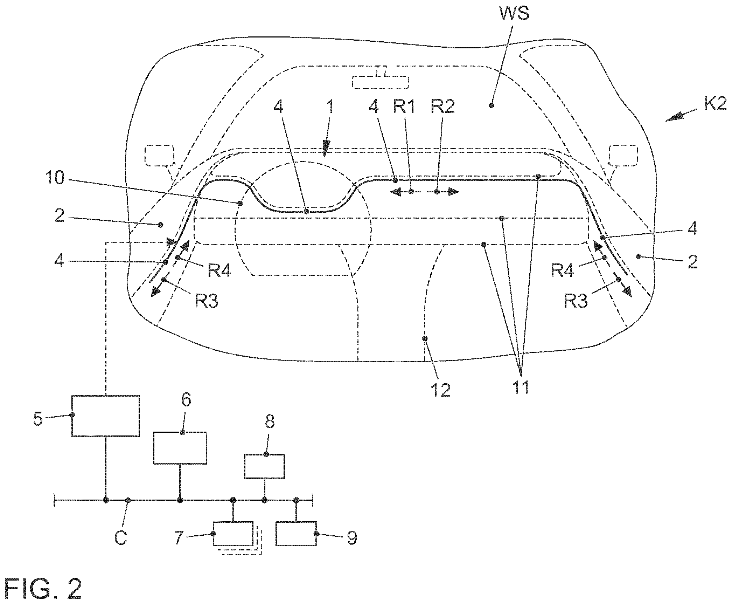

Im Unterschied dazu zeigt die Fig. 2 ein Kraftfahrzeug K2, bei dem eine linien- oder streifenartige Beleuchtungsvorrichtung 4 im Bereich des Cockpits 1, und zwar auf der Instrumententafel 11 vorhanden ist. Die Beleuchtungsvorrichtung 4 erstreckt sich nicht nur über die gesamte Breite der Instrumententafel 11, sondern erstreckt sich zudem noch beidseitig der Instrumententafel 11 entlang eines Teils der Türverkleidungen 2. Somit sind Lichtanimationen erzeugbar, welche nicht nur in die Richtungen R1 und R2, sondern auch in Richtungen R3 und R4 laufen. Auf diese Weise ist somit eine zweidimensionale Ausprägung von Lichtanimationen möglich.

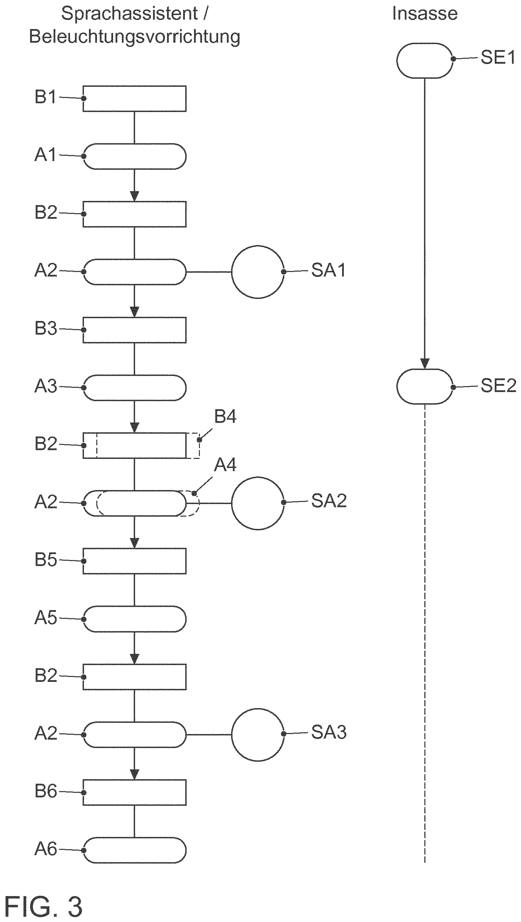

Anhand der Fig. 3 soll eine mögliche Funktionsweise des erwähnten Spracherkennungssystems 9 (Sprachassistent) erläutert werden.

Dabei sind in der rechten Spalte Spracheingabe SE1 und SE2 eines Fahrzeuginsassen und in der linken Spalte davon abhängige Betriebszustände B1 bis B6 des Spracherkennungssystems 9 und dadurch verursachte Animationen A1 bis A6 der Beleuchtungsvorrichtung 3 dargestellt.

So lautet im Ausführungsbeispiel die Spracheingabe SE1 "Hallo VOLKSWAGEN!". Daraufhin nimmt der Sprachassistent den Betriebszustand B1 (Aktivieren) an. Dieser Betriebszustand B1 wird der Auswerte- und Steuereinrichtung 5 über den Datenbus C mitgeteilt. Dies führt wiederum dazu, dass die Auswerte- und Steuereinrichtung 5 die Leuchtmittel der Beleuchtungsvorrichtung 3 derart ansteuert, dass ein Lichterscheinungsbild in Form einer Animation A1 erscheint. Analog erfolgt die Vorgehensweise für die weiter genannten Betriebszustände des Sprachassistenten sowie die in Abhängigkeit davon erzeugten Animationen.

Vom Betriebszustand B1 geht der Sprachassistent in den Betriebszustand B2 (Ausgeben) über. Dies führt zur Erzeugung der Animation A2, verbunden mit der Sprachausgabe SA1 ("Ja bitte?").

Anschließend geht der Sprachassistent in den Betriebszustand B3 (Zuhören) über. Dies ist mit Erzeugung der Animation A3 verbunden. In diesem Betriebszustand gibt der Fahrzeuginsasse die Spracheingabe SE2 ("Mir ist warm!") ein.

Der Sprachassistent geht daraufhin in die Betriebszustände B2 (Ausgeben) und B4 (Bestätigen) über, die sich überschneiden beziehungsweise parallel einstellen. Dies führt zur Erzeugung der Animationen A2 und A4, welche sich ebenfalls überschneiden beziehungsweise parallel ausgeführt werden. Die Animationen A2 und A4 werden durch die Sprachausgabe SA2 ("OK!") begleitet.

Anschließend geht der Sprachassistent in den Betriebszustand B5 (Verarbeiten) über. Dies führt zur Animation A5. Während des Betriebszustandes B5 ist beispielsweise denkbar, dass der Sprachassistent ein Klimasteuergerät dazu veranlasst, die Innentemperatur entsprechend zu ändern.

Wurde alles Notwendige veranlasst, so geht der Sprachassistent abermals in den Betriebszustand B2 (Ausgeben) über. Dies führt wiederum zur Animation A2, verbunden mit der Sprachausgabe SA3 ("Gleich wird's kühler!").

Nach erledigter Arbeit nimmt der Sprachassistent den Betriebszustand B6 (Desaktivieren) an. Dies führt zur Animation A6.

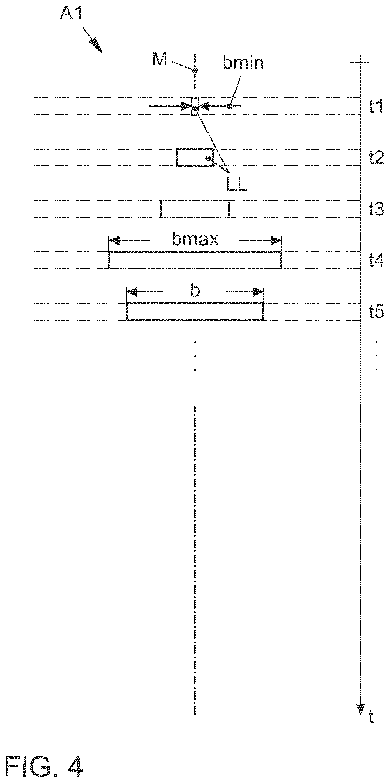

Anhand der Fig. 4 bis 15 sollen nun bevorzugte Animationen, welche in Abhängigkeit des Betriebszustandes vom Sprachassistenten erzeugt werden, näher erläutert werden.

Dabei ist darauf hinzuweisen, dass zur Darstellung des Animationsverlaufs jeweils die durch die Beleuchtungsvorrichtung 3 erzeugten Lichtlinien zu unterschiedlichen, aufeinander folgenden Zeitpunkten dargestellt werden. Die Zeitpunkte werden jeweils in aufsteigender Reihenfolge beziffert, wobei die Zeitabstände zwischen den aufeinanderfolgend dargestellten Zeitpunkten (im Regelfall) in etwa als gleich zu betrachten sind, um eine Vorstellung der ablaufenden Animation zu erhalten. Jede der Animationen weist jedoch (in der Regel) nur eine geringe Zeitdauer auf, die bevorzugt nur im Sekundenbereich liegt. Die Zeitdauer einer Animation kann bevorzugt zwischen etwa 1 bis 3 Sekunden liegen. Insofern können durch die Darstellungen wesentliche Eckpunkte der jeweils durchgeführten Animation erfasst werden. Dabei ist jede Animation das Ergebis der Art und Weise der Ansteuerung der nebeneinander angeordneten Leuchtmittel der Beleuchtungsvorrichtung 3 durch die Auswerte- und Steuereinrichtung 5.

Wie bereits erwähnt sind, die Leuchtmittel (nicht dargestellt) vorzugsweise als Leuchtdioden ausgebildet und in einem gegenseitigen Abstand von etwa 8 bis 22 mm nebeneinander angeordnet.

Des Weiteren gilt, dass eine schwarze Fläche eine maximale Helligkeit einer erzeugten Lichtlinie bedeutet, während schraffierte Flächen eine reduzierte beziehungsweise gedimmte Helligkeit einer erzeugten Lichtlinie darstellen sollen. Eine zunehmende Dichte der Schraffur bedeutet gleichfalls auch eine zunehmende Helligkeit der erzeugten Lichtlinie.

Ferner ist in den Figuren mit M eine Mittellinie beziffert, zu der eine Linie gegebenenfalls mittig ausgerichtet ist. Mit LL sind jeweils erzeugte Lichtlinien beziffert. Die Breite der vom Sprachassistenten hervorgerufenen Animationen erstreckt sich jeweils nur über einen Teilbereich der Beleuchtungsvorrichtung 3, vorzugsweise ist die Breite nur einige Zentimeter groß.

So zeigt die Fig. 4 die Animation A1, welche auf der Beleuchtungsvorrichtung 3 beim Betriebszustand B1 (Aktivieren) des Sprachassistenten erzeugt wird. Zum Zeitpunkt t1 wird eine Lichtlinie LL mit einer minimalen Breite bmin erzeugt. Die Lichtlinie LL wird dabei kontinuierlich zu einer maximalen Breite bmax (vergleiche t4) erweitert und nimmt danach (Zeitpunkt t5) eine Breite b ein, welche geringfügig geringer ist als die Breite bmax. Danach bleibt die Breite b konstant, solange bis die Animation A1 beendet wird.

Damit die Lichtlinien LL für einen Fahrzeugführer gut sichtbar sind, reicht es aus, wenn die Breite bmin bereits wenige Millimeter beträgt. Die Breiten bmax und b betragen vorzugsweise einige Zentimeter, beispielsweise in etwa 10 bis 20 Zentimeter.

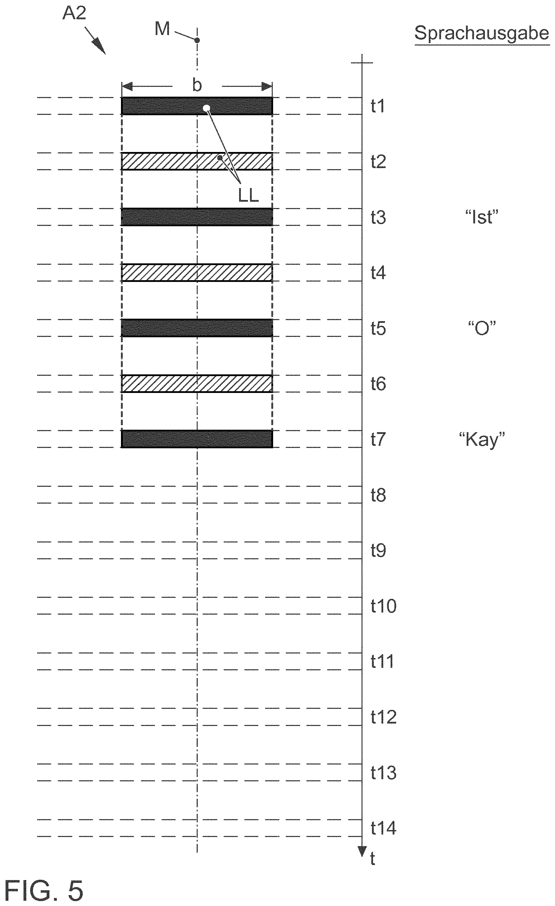

Die Fig. 5 zeigt die Animation A2, welche beim Betriebszustand B2 (Ausgeben) des Sprachassistenten erzeugt wird. Dabei ist beispielhaft die Sprachausgabe "Ist ok!" des Sprachassistenten auf der rechten Spalte der Figur dargestellt.

Dabei wird zunächst eine Lichtlinie LL mit einer bestimmten Breite b und mit einer maximalen Helligkeit erzeugt. In Rhythmus der Sprachausgabe erfolgt dann ein Wechsel der Helligkeit zwischen einer geringeren Helligkeit (vergleiche Zeitpunkte t2, t4 und t6) und einer höheren Helligkeit (vergleiche Zeitpunkte t3, t5 und t7).

Im Ausführungsbeispiel werden die Leuchtdioden der Beleuchtungsvorrichtung 3 derart angesteuert, dass mit Ausgabe einer Silbe durch den Sprachassistenten jeweils der Wechsel zur höheren beziehungsweise maximalen Helligkeit der Lichtlinie LL erfolgt (vergleiche t3, t5 und t7).

Die Animationen A1 und A2 sind zwar als getrennte Animationen dargestellt, es ist jedoch durchaus denkbar, dass diese Animationen überlagert werden.

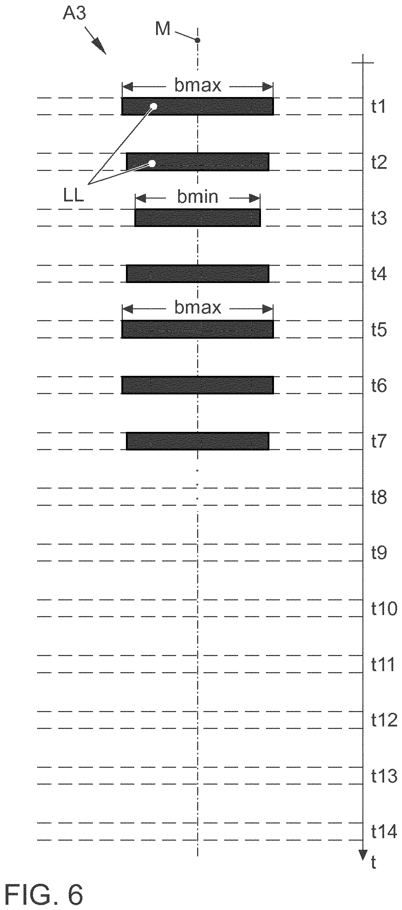

Die Fig. 6 beschreibt die Animation A3, welche beim Betriebszustand B3 (Zuhören) des Sprachassistenten ausgegeben wird. Dabei wird zunächst eine Lichtlinie LL mit einer maximalen Breite bmax erzeugt, welche kontinuierlich in ihrer Breite bis auf eine minimale Breite bmin verringert wird (vergleiche Zeitpunkt t3). Danach wird die Lichtlinie LL wieder bis zur maximalen Breite bmax vergrößert (Zeitpunkt t5). Der Vorgang des sich Verkleinerns und Vergrößerns wird solange zyklisch wiederholt, wie sich der Sprachassistent in dem Betriebszustand B3 befindet.

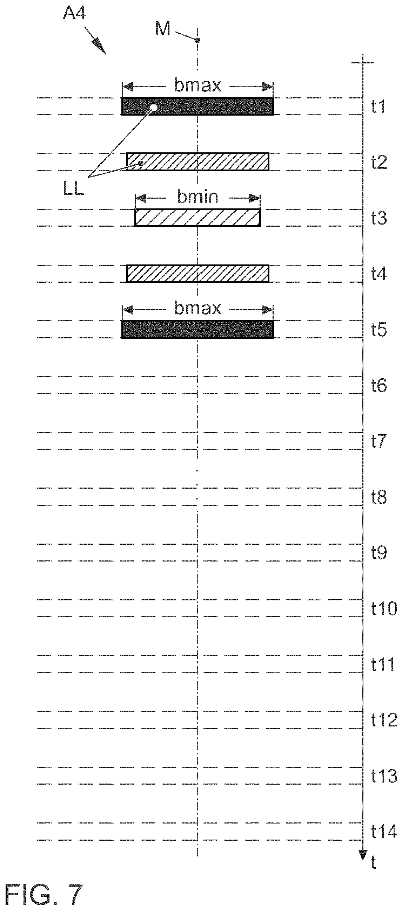

Im Betriebszustand B4 (Bestätigen) des Sprachassistenten wird die Animation A4 gemäß Fig. 7 ausgelöst. Hierbei wird zunächst eine Lichtlinie LL mit maximaler Breite bmax und maximaler Helligkeit erzeugt. Ausgehend davon wird die Breite der Lichtlinie LL kontinuierlich bis zu einer minimalen Breite bmin und einer minimalen Helligkeit verringert (Zeitpunkt t3). Danach erfolgt wieder eine Vergrößerung der Breite bis zur maximalen Breite bmax und bis zur maximalen Helligkeit (Zeitpunkt t5).

Obwohl die Animation A4 als separate Animation dargestellt ist, ist es auch hierbei denkbar, dass die Animation A4 mit der Animation A2 (vergleiche auch Fig. 3 kombiniert wird.

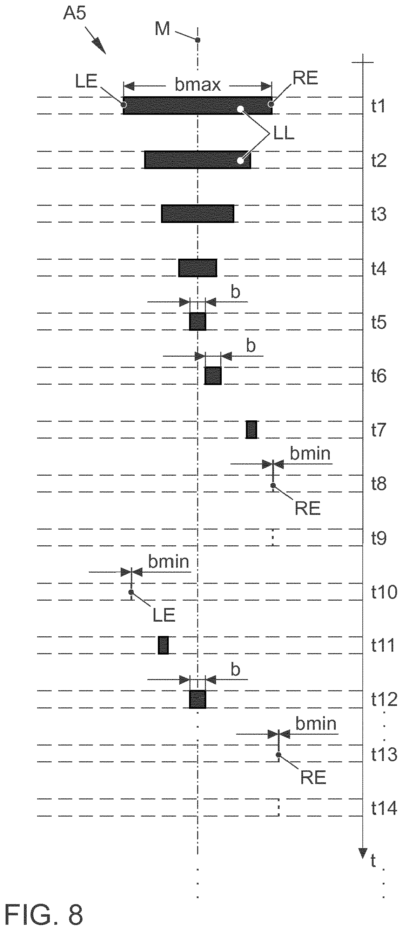

In der Fig. 8 ist die Animation A5 dargestellt, welche erscheint, wenn der Sprachassistent den Betriebszustand B5 (Verarbeiten) annimmt). In diesem Betriebszustand werden also vom Sprachassistenten bestimmte Steuergeräte dazu veranlasst, per Spracheingabe gewünschte Einstellungen, wie beispielsweise Klima- oder Audioeinstellungen, vorzunehmen. Hierbei wird zunächst eine Lichtlinie LL mit maximaler Breite bmax erzeugt. Anschließend wird die Breite der Lichtlinie bis auf eine Breite b verringert (Zeitpunkt t5). Dann wandert die Lichtlinie LL, ausgehend von der Mittellinie M weiter nach rechts und wird ab einem bestimmten Zeitpunkt (t7) in ihrer Breite solange verringert, bis sie eine minimale Breite bmin annimmt. Dabei erreicht sie mit ihrem rechten Ende ein rechtes Ende RE (Zeitpunkt t8), welches die ursprünglich zum Zeitpunkt t1 erzeugte Lichtlinie LL aufwies.

Schließlich (Zeitpunkt t9) verschwindet die Lichtlinie LL vollends.

Anschließend (Zeitpunkt t10) erscheint die Lichtlinie LL mit der minimalen Breite bmin mit ihrem linken Ende an einer Position, welche einem linken Ende LE der zum Zeitpunkt t1 erzeugten Lichtlinie LL entspricht. Danach wird die Breite der Lichtlinie LL wieder bis zu einer Breite b (vergleiche Zeitpunkte t5 und t12) vergrößert und wandert dabei kontinuierlich nach rechts, bis sie mittig zur Mittellinie M steht. Nach Erreichen der Breite b nimmt die Breite der Lichtlinie LL wieder kontinuierlich ab, bis wieder die minimale Breite bmin erreicht und die Lichtlinie mit ihrem rechten Ende eine Position einnimmt, die dem rechten Ende RE der zum Zeitpunkt t1 erzeugten Lichtlinie LL entspricht (vergleiche t13). Kurz danach, zum Zeitpunkt t14 verschwindet die Lichtlinie LL vollends.

Für die Zeitdauer, in dem sich der Sprachassistent im Bearbeitungszustand B5 (Verarbeiten) befindet, wird die in den Animationsschritten gemäß den Zeitpunkten t10 bis t14 dargestellte Animation kontinuierlich wiederholt.

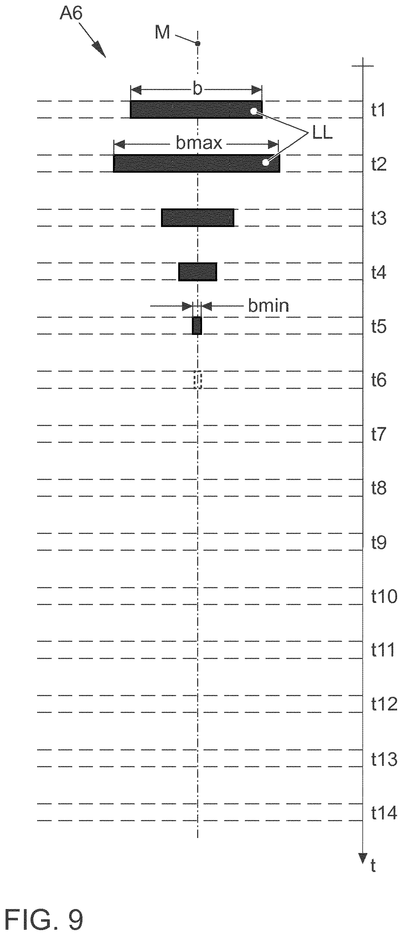

Fig. 9 beschreibt die Animation A6, die beim Bearbeitungszustand B6 (Deaktivieren) des Sprachassistenten erzeugt wird.

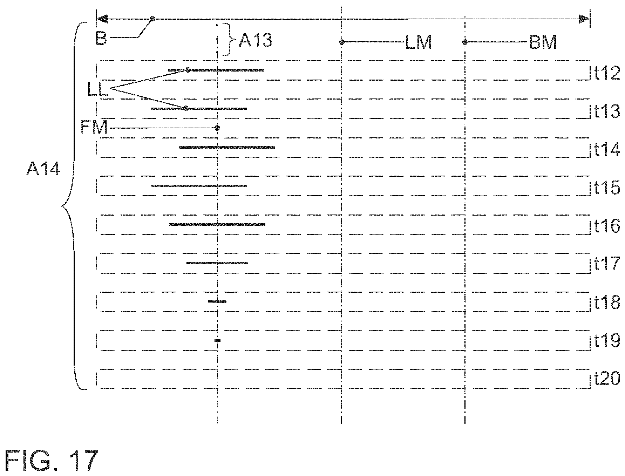

Es sei darauf hingewiesen, dass sich bei den gezeigten Animationen die Mittellinie M an unterschiedlichen Stellen der Beleuchtungsvorrichtung 3 befinden kann. Vorzugsweise ist die Mittellinie M jedoch deckungsgleich mit einer Längsmittenebene FM der Fahrerseite oder mit einer Längsmittenebene BM der Beifahrerseite (vergleiche auch Fig. 17), je nachdem von wem eine Spracheingabe stammt.

Bei der Animation A6 wird nun zunächst eine Lichtlinie LL in einer Breite b erzeugt. Anschließend (Zeitpunkt t2) wird die Lichtlinie LL kurzzeitig bis auf eine maximale Breite bmax vergrößert, um sich danach schlagartig auf eine minimale Breite bmin (Zeitpunkt t5) zu verkleinern und sofort danach (Zeitpunkt t6) ganz zu verschwinden. Der zeitliche Abstand der Zeitpunkte t1 und t2 ist in diesem Fall ausnahmsweise deutlich länger als die zeitlichen Abstände zwischen den anderen genannten Zeitpunkten.

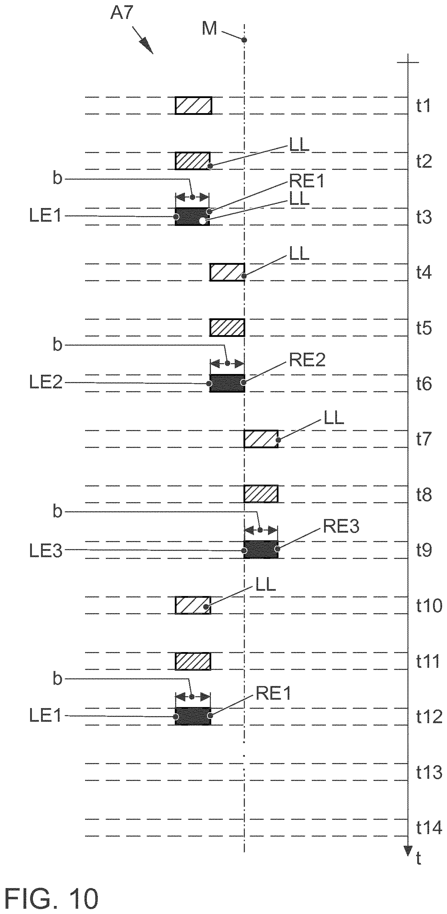

Die Fig. 10 beschreibt eine Animation A7, die ausgelöst wird, wenn sich der Sprachassistent im Betriebszustand "Warten" befindet. Hierbei wird eine Lichtlinie LL eingeblendet, mit einem linken Ende LE1 und einem rechten Ende RE1 (vergleiche Zeitpunkte t1 bis t3). Anschließend wird eine neue Lichtlinie mit der gleichen Breite b eingeblendet, die ein linkes Ende LE2 und ein rechtes Ende RE2 aufweist.

Dabei stimmt das linke Ende LE2 mit dem rechten Ende RE1 der zuvor eingeblendeten Lichtlinie LL überein (vergleiche Zeitpunkte t4 bis t6). Im Anschluss daran wird wiederum eine neue Lichtlinie LL mit gleicher Breite b eingeblendet, mit einem linken Ende LE3 und einem rechten Ende RE3. Das linke Ende LE3 stimmt wiederum mit dem rechten Ende RE2 der zuvor eingeblendeten Lichtlinie LL überein (vergleiche Zeitpunkte t7 bis t9).

Im Anschluss daran wird wiederum eine Lichtlinie LL mit der gleichen Breite b eingeblendet, deren linkes Ende mit dem linken Ende LE1 und deren rechtes Ende mit dem rechten Ende RE1 der anfangs (Zeitpunkte t1 bis t3) eingeblendeten Lichtlinie übereinstimmt. Die Animation A7 mit den Zeitpunkten t1 bis t9 wird solange wiederholt, bis der Wartezustand des Sprachassistenten beendet wird. Im Wartezustand wartet der Sprachassistent in erster Linie auf eine Spracheingabe eines Benutzers.

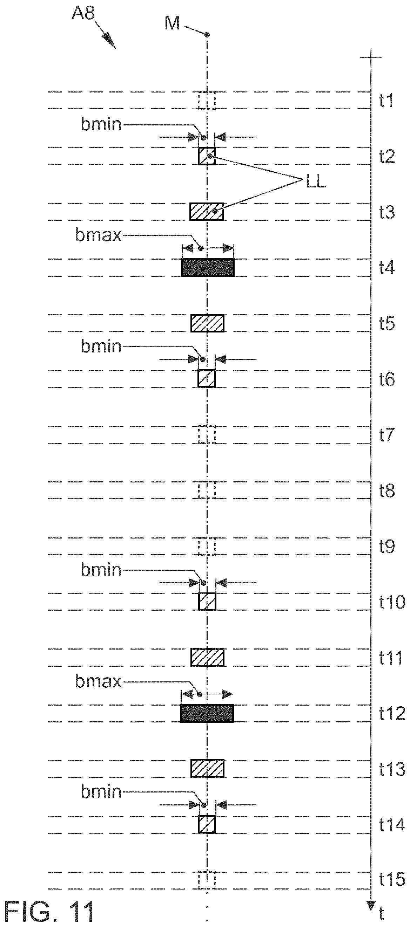

Anhand der Fig. 11 wird nunmehr eine Animation A8 näher erläutert, die in einem Standby-Zustand des Sprachassistenten durch geeignete Ansteuerung der Leuchtmittel der Beleuchtungsvorrichtung 3 erzeugt wird. Hierbei wird zunächst eine Lichtlinie LL mit einer minimalen Breite bmin eingeblendet (Zeitpunkt t2), welche auf eine maximale Breite bmax vergrößert wird (Zeitpunkt t4). Anschließend wird die Lichtlinie LL wieder bis zu ihrer minimalen Breite bmin verkleinert (Zeitpunkt t6) und ausgeblendet (Zeitpunkte t7 bis t9). Die Lichtlinie LL nimmt bei ihrer maximalen Breite bmax jeweils auch ihre maximale Helligkeit an. Der Vorgang wird solange wiederholt, wie sich der Sprachassistent in einem Standby-Modus befindet.

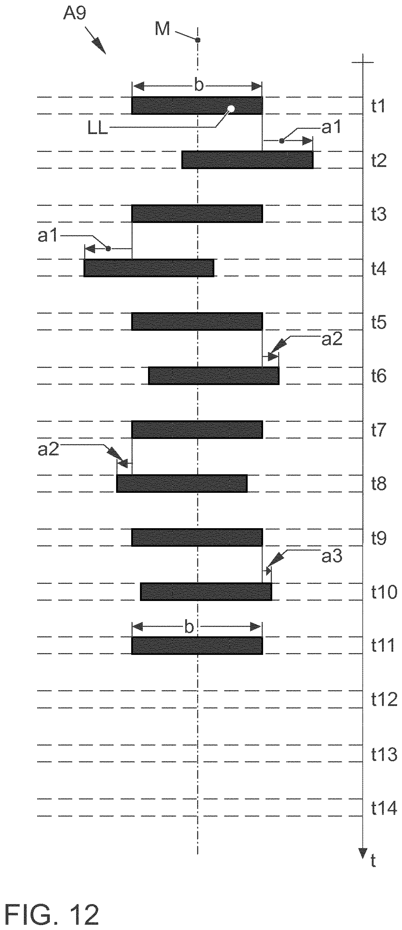

In Fig. 12 ist eine Animation A9 dargestellt, bei der sich der Sprachassistent in einem Betriebsmodus "Verneinen" befindet. Hierbei wird eine Lichtlinie LL erzeugt, welche eine Breite b aufweist. Ausgehend von der Mittellinie M vollführt die Lichtlinie LL ruckartige Ausschläge nach rechts und nach links, was an ein Kopfschütteln erinnern soll.

Vorzugsweise nimmt die Größe der Ausschläge zum Ende der Animation A9 ab. Dies soll beispielhaft anhand der Ausschläge a1, a2 und a3 dargestellt werden, welche in ihrer Größe ebenfalls abnehmen. Schließlich (Zeitpunkt t11) ruht die Lichtlinie LL wieder in ihrer Ausgangsposition.

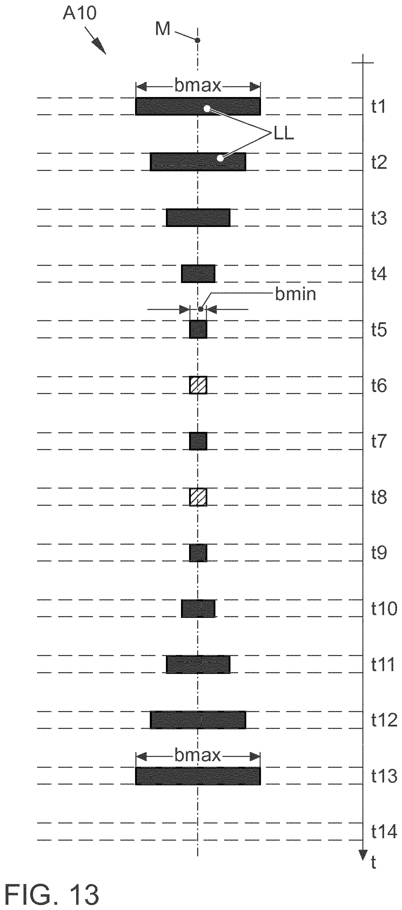

Die Animation A10, welche in der Fig. 13 dargestellt ist, stellt einen Hinweis dar, der vom Sprachassistenten abgegeben wird. Dabei wird zunächst eine Lichtlinie LL mit einer maximalen Breite bmax erzeugt. Diese wird kontinuierlich bis zu einer minimalen Breite bmin verkleinert (vergleiche Zeitpunkt t5).

Anschließend wechselt die Helligkeit der Lichtlinie LL zweimal zwischen einer minimalen und einer maximalen Helligkeit (vergleiche Zeitpunkte t6 bis t9) und wird anschließend wieder zu ihrer maximalen Breite bmax vergrößert (Zeitpunkt t13).

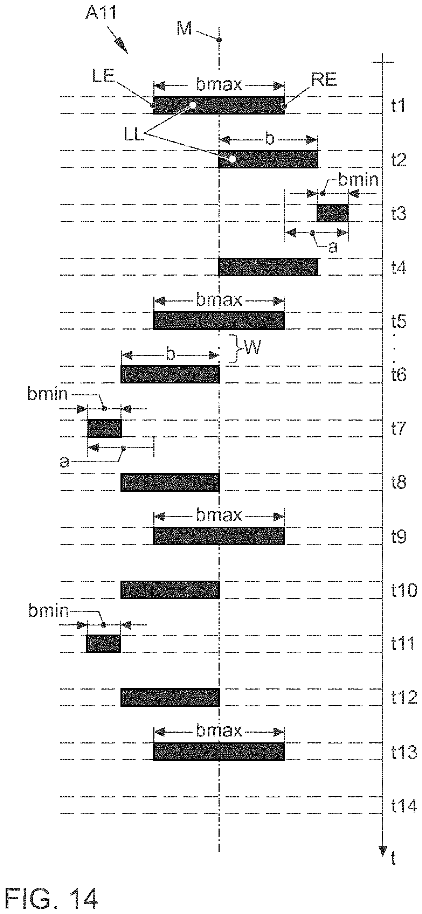

Um dem Sprachassistenten eine ganz "persönliche" Note zu geben, wird in einer Animation A11 ein Betriebszustand des Sprachassistenten nachempfunden, bei dem sich der Sprachassistent "freut". Dies ist in Fig. 14 dargestellt. Hierbei wird zunächst eine Lichtlinie mit einer maximalen Breite bmax erzeugt, welche dann mit ihrem rechten Ende RE einen Ausschlag a nach rechts vollführt. Gleichzeitig wird die Breite der Lichtlinie LL auf eine minimale Breite bmin verringert (Zeitpunkt t3). Anschließend bewegt sich die Lichtlinie wieder zu ihrer Ausgangsposition zurück, wobei die Breite wieder auf die maximale Breite bmax vergrößert wird (Zeitpunkt t5). Danach erfolgt eine Wiederholung W der in den Zeitpunkten t2 bis t5 gezeigten Phasen. Anschließend wird die Lichtlinie LL mit ihrem linken Ende LE nach links bewegt und führt einen Ausschlag a aus, wobei sich die Breite der Lichtlinie LL wiederum bis auf eine minimale Breite bmin verringert (Zeitpunkt t7). Die Bewegung nach links wird also analog zur Bewegung nach rechts ausgeführt. Im Anschluss daran wird die Lichtlinie wieder zu ihrer Ausgangsposition bewegt und nimmt ihre maximale Breite bmax ein (vergleiche Zeitpunkt t9). Die in den Zeitpunkten t6 bis t9 gezeigten Phasen werden noch einmal wiederholt (vergleiche Zeitpunkte t10 bis t13).

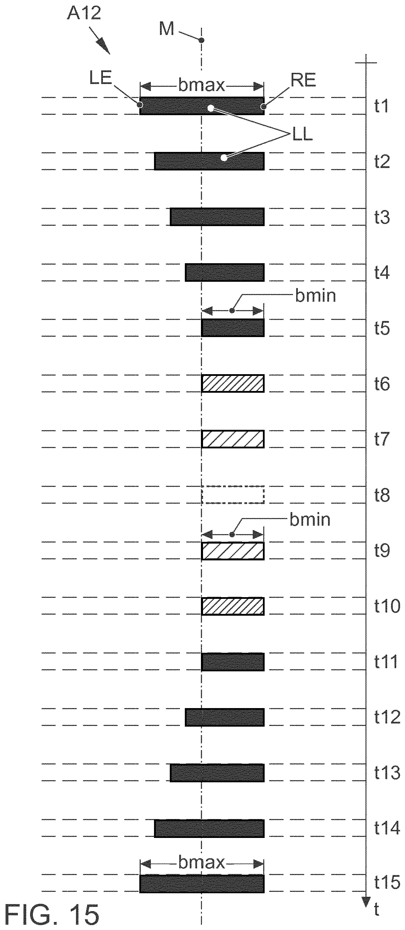

In der Fig. 15 ist ebenfalls eine Animation A12 beschrieben, die zur "Vermenschlichung" des Sprachassistenten beiträgt. Die Animation A12 soll einen Betriebszustand "Zuzwinkern" des Sprachassistenten nachempfinden. Hierbei werden die Leuchtmittel der Beleuchtungsvorrichtung 3 von der Auswerte- und Steuereinrichtung 5 wie folgt angesteuert:
Es wird zunächst eine Lichtlinie LL mit einer maximalen Breite bmax erzeugt. Diese wird ausgehend von ihrem linken Ende LE kontinuierlich bis zu einer minimalem Breite bmin verkleinert (Zeitpunkt t5). Anschließend wird die Helligkeit der Lichtlinie LL soweit reduziert, bis die Lichtlinie LL nicht mehr sichtbar ist (Zeitpunkt t8). Sodann erfolgt wieder eine Einblendung der in der Breite reduzierten Lichtlinie LL bis zur maximalen Helligkeit (Zeitpunkte t9 bis t11) und auf Seite des linken Endes LE eine Vergrößerung bis zur maximalen Ausgangsbreite bmax (Zeitpunkt t15).

Mit den zuvor beschriebenen Animationen sind die wesentlichen Animationen, welche durch den Sprachassistenten hervorgerufen werden. Diese verleihen dem Sprachassistenten eine besondere, persönliche Note. Ihm kann dadurch ein "Gesicht" gegeben werden.

Die Interaktion mit dem Kraftfahrzeug fühlt sich auf diese Weise natürlich und persönlich an.

In den folgenden Figuren sollen nunmehr Animationen beschrieben werden, welche in Abhängigkeit vom Betriebszustand des Kraftfahrzeugs K1 und/oder in Abhängigkeit von Betriebszuständen oder Daten von Fahrerassistenzsystemen erzeugt werden.

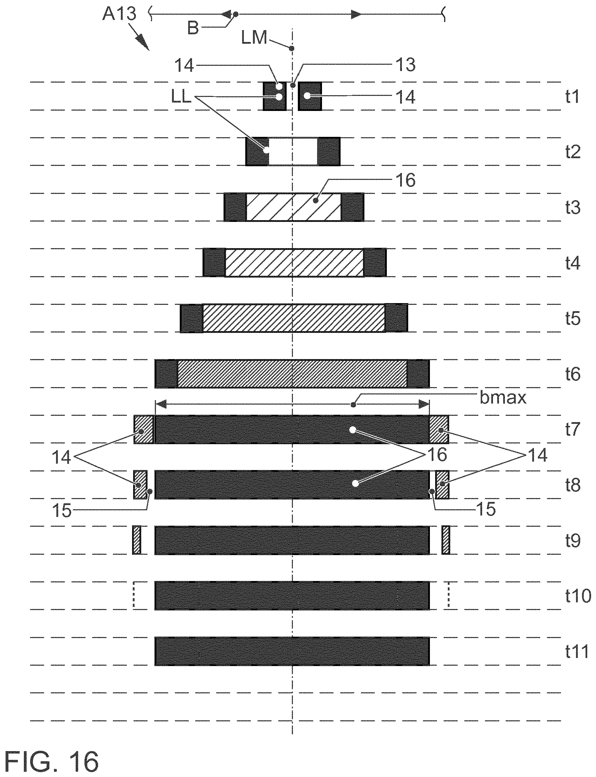

So ist in Fig. 16 eine Animation A13 dargestellt. Sie wird verwendet, wenn die Betriebsbremse das Kraftfahrzeugs K1 getreten wird. Die Animation A13 kann vorzugsweise als Bestandteil eines Welcome-Szenarios verwendet werden, welches später noch beschrieben wird. Konkret wird dabei zunächst eine Lichtlinie LL erzeugt, welche aus zwei äußeren Lichtlinien 14 besteht, die durch einen (dunklen) Abstand 13 voneinander getrennt sind. Im Anschluss daran wandern die äußeren Lichtlinien 14 immer weiter auseinander, wobei gleichzeitig eine innere Lichtlinie 16 eingeblendet wird (Zeitpunkt t3). Schließlich nehmen die äußeren Lichtlinien 14 einen maximalen Abstand ein und auch die Helligkeit der inneren Lichtlinie 16 wird so hoch, dass die innere Lichtlinie 16 mit den äußeren Lichtlinien 14 optisch verschmilzt. Gleichzeitig werden beidseitig der entstandenen, inneren Lichtlinie 16 wiederum äußere Lichtlinie 14 eingeblendet (t7). Diese lösen sich von der inneren Lichtlinie 16 ab, indem Abstände 15 gebildet werden und verringern sich in ihrer Breite, bis sie vollends verschwinden (vergleiche Zeitpunkte t7 bis t11). Mit LM ist wiederum die Längsmittenebene des Kraftfahrzeugs K1 beziffert, zu der die Animation A13 mittig ausgerichtet ist.

In der Fig. 17 wird eine Animation A14 beschrieben, die ebenfalls in Zusammenhang mit einem Welcome-Szenario verwendet werden kann. Konkret soll die Animation A14 darauf hinweisen, dass die Betriebsbremse des Kraftfahrzeugs getreten werden soll, um in den fahrbereiten Zustand zu gelangen.

Wie ersichtlich, umfasst die Animation A14 zunächst die in Fig. 16 beschriebene Animation A13, mit dem Unterschied, dass die Animation A14 insgesamt mittig zu einer Längsmittenebene FM der Fahrerseite ausgeführt wird. Mit BM ist eine Längsmittenebene der Beifahrerseite, mit B die Breite des Innenraums vom Kraftfahrzeug K1 bzw. die Breite der Beleuchtungsvorrichtung 3 beziffert.

Im Anschluss an die Animation A13 vollführt die Lichtlinie LL mit ihrer maximalen Breite Auslenkungen nach links, nach rechts und wieder nach links, bevor sie in den Ausgangszustand zurückkehrt (vergleiche Zeitpunkte t12 bis t16). Anschließend wird die Lichtlinie LL in ihrer Breite verringert, bis sie ganz verschwindet (Zeitpunkt t17 bis t20).

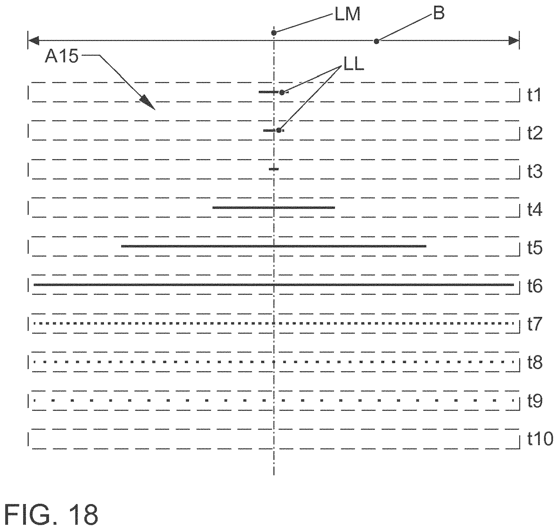

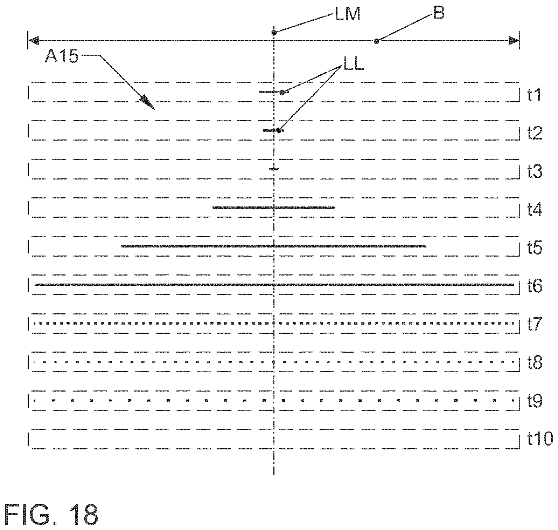

Die in Fig. 18 beschriebene Animation A15 kann ebenfalls Bestandteil einer Welcome-Inszenierung sein. Hierbei ist zu beachten, dass sich diese Animation über die gesamte oder nahezu die gesamte Breite B des Innenraums vom Kraftfahrzeug K1 erstreckt. Da hierbei auch eine Veränderung der Helligkeit der erzeugten Lichtlinien LL stattfindet, soll dies der Einfachheit halber lediglich dadurch verdeutlicht werden, dass mit reduzierter Helligkeit eine Punktlinie dargestellt wird. Steigender Abstand der Punkte bedeutet eine sinkende Helligkeit.

So wird zunächst mittig zur Längsmittenebene LM des Kraftfahrzeugs eine Lichtlinie LL erzeugt. Diese wird anschließend bis zu einer minimalen Breite verkleinert (Zeitpunkt t1 bis t3). Danach erfolgt eine ruckartige, deutliche Vergrößerung der Breite der Lichtlinie LL. Im Anschluss daran erfolgt eine kontinuierliche, rasche Verbreiterung der Lichtlinie LL, bis auf eine Breite, die der Breite B oder nahezu der Breite B entspricht (Zeitpunkt t5 und t6). Anschließend erfolgt eine Ausblendung der Lichtlinie LL, bis diese verschwindet (Zeitpunkte t7 bis t10). Der Zeitraum von den Zeitpunkten t4 bis t10 kann mit einem Signalton untermalt sein. Ebenso ist denkbar die Lichtlinie LL in grüner Farbe erleuchten zu lassen.

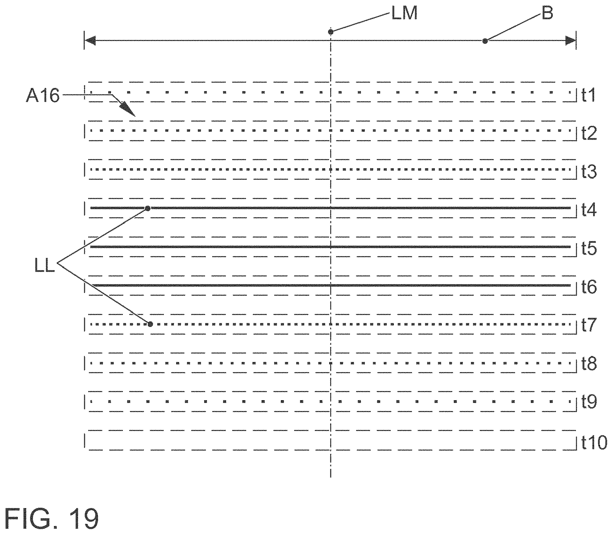

In der Fig. 19 ist eine Animation A16 beschrieben, die zur Unterstützung einer Bremsaufforderung verwendet werden kann, welche von einem Fahrerassistenzsystem generiert wurde. Die Bremsaufforderung kann beispielsweise von einem automatischen Abstandsregelsystem (AAC), einer Einparkhilfe (PDC) oder auch von einem Verkehrszeichen-Erkennungssystem kommen, welches den Fahrzeugführer auf eine übertretene Höchstgeschwindigkeit hinweisen möchte. Bei dieser Animation erfolgt die Einblendung einer Lichtlinie LL, welche sich von Anfang an über die gesamte oder nahezu die gesamte Breite B des Innenraums vom Kraftfahrzeug K1 erstreckt. Hierbei wird die Lichtlinie LL bis zu einer maximalen Helligkeit eingeblendet (vergleiche Zeitpunkte t1 bis t4), leuchtet dann eine gewisse Zeitdauer (Zeitpunkte t4 bis t6) und wird anschließend wieder bis zum Verschwinden ausgeblendet (Zeitpunkte t7 bis t10). Die Animation A16 kann im Zeitraum von den Zeitpunkten t4 bis t6, also während der vollen Helligkeit der Lichtlinie LL, mit einem Signalton unterlegt sein. Ebenfalls ist denkbar, dass die Lichtlinie LL in rotem Licht erzeugt wird. Die Leuchtmittel der Beleuchtungsvorrichtung 3, welche beispielsweise als RGB-Leuchtdioden ausgebildet sein können, werden also zusätzlich derart angesteuert, dass sie rotes Licht aussenden.

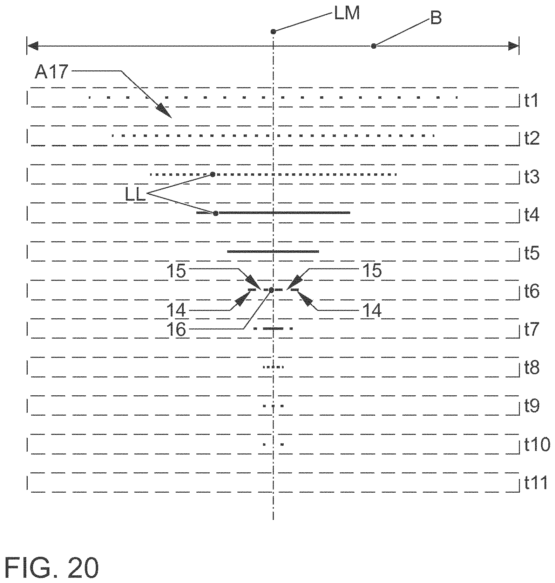

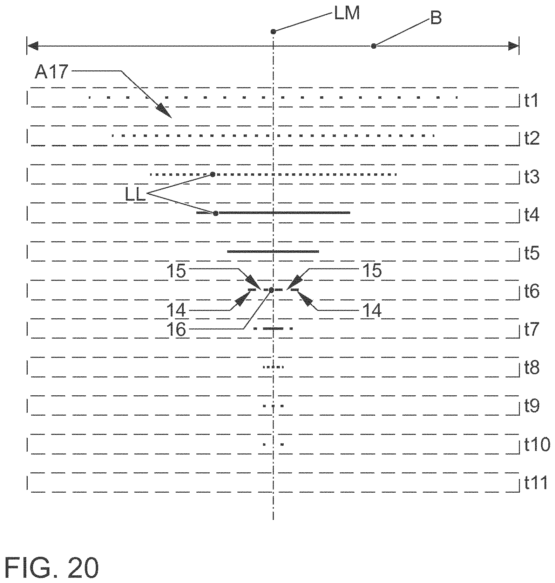

Die Fig. 20 beschreibt eine Animation A17, welche in Zusammenhang mit einem Goodbye-Szenario verwendet wird. Ein Goodbye-Szenario ist beispielsweise dann denkbar, wenn der Fahrzeugführer den Fahrstufen-Wählhebel nach dem Anhalten des Kraftfahrzeugs auf "P" (Parken) stellt.

Hierbei wird zunächst eine Lichtlinie LL erzeugt, welche über einen Großteil der Breite B des Innenraums reicht, jedoch noch eine reduzierte Helligkeit aufweist. Die Helligkeit der Lichtlinie LL wird kontinuierlich bis zu einer maximalen Helligkeit erhöht, wobei gleichzeitig die Breite der Lichtlinie LL reduziert wird (vergleiche Zeitpunkte t1 bis t4). Im Anschluss daran erfolgt eine weitere Reduzierung der Breite, wobei die Lichtlinie LL zusätzlich in eine innere Lichtlinie 16 und zwei äußere Lichtlinien 14 aufgetrennt wird, welche durch Abstände 15 voneinander getrennt sind (vergleiche Zeitpunkte t5 und t6). Im weiteren Verlauf wird die Breite der inneren Lichtlinie 16 leicht vergrößert, während die Breite der äußeren Lichtlinien 14 verringert wird und diese verschwinden. Gleichzeitig wird auch die Helligkeit der inneren Lichtlinie 16 bis zu ihrem Verschwinden reduziert (vergleiche Zeitpunkte t7 bis t11). Es ist denkbar, die Animation A17 mit einem Signalton zu unterlegen.

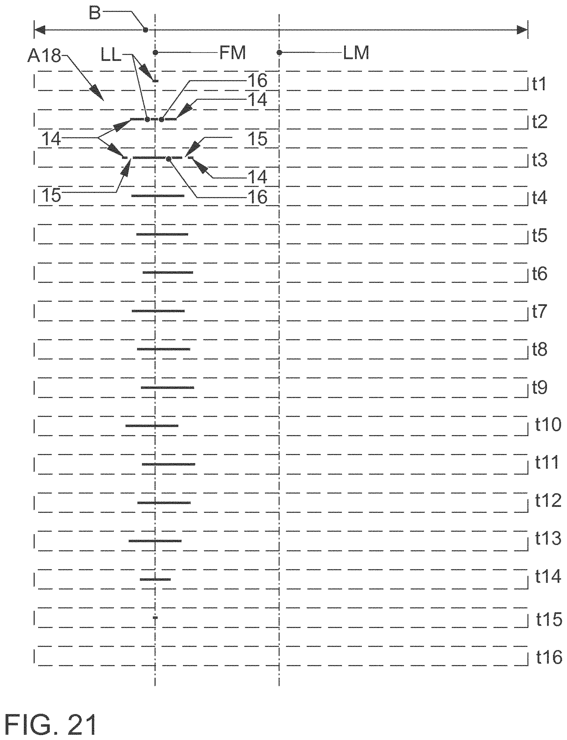

in der Fig. 21 wird eine Animation A18 dargestellt, welche den Fahrzeugführer darauf hinweisen soll, dass die Feststellbremse seines Kraftfahrzeugs betätigt ist. Die Animation A18 ist auf die Längsmittenebene FM der Fahrerseite ausgerichtet. So wird zunächst eine Lichtlinie LL erzeugt und auf eine maximale Breite vergrößert. Zusätzlich werden äußere Lichtlinien 14 eingeblendet, welche sich zunehmend von der inneren Lichtlinie 16 lösen und verschwinden (vergleiche Zeitpunkte t1 bis t4). Dies erfolgt in ähnlicher Weise wie bei der bereits beschriebenen Animation A13. Anschließend wird die Lichtlinie LL mehrmals nach rechts und links ruckartig bewegt, was wie ein Wackeln aussieht und kommt schließlich in ihrer mittigen Ausgangsposition zur Ruhe (vergleiche Zeitpunkte t5 bis t13). Danach wird die Lichtlinie LL in ihrer Breite so lange reduziert, bis sie verschwindet (vergleiche Zeitpunkte t13 bis t16). Die Animation 18 kann vorzugsweise im Zeitraum der Zeitpunkte t1 bis t4 mit einem Signalton unterlegt sein. Ferner ist denkbar, dass die innere Lichtlinie 16 in orangener Farbe und die äußeren Lichtlinien 14 in weißer Farbe erzeugt werden.

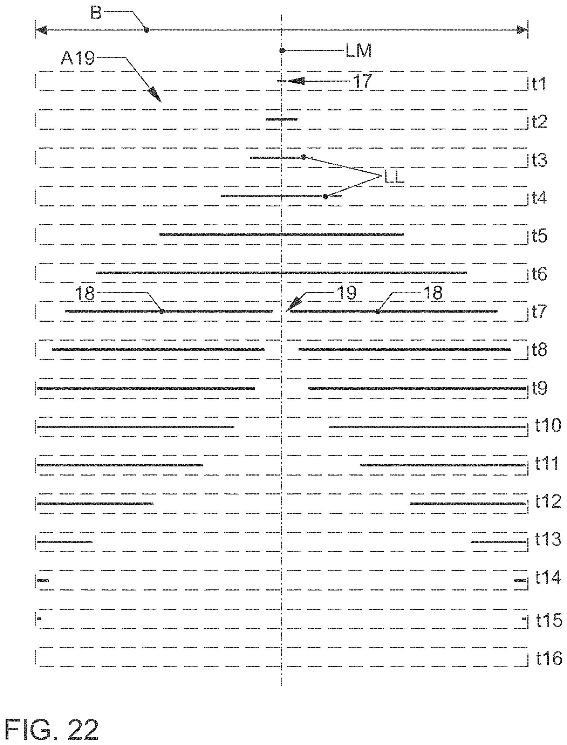

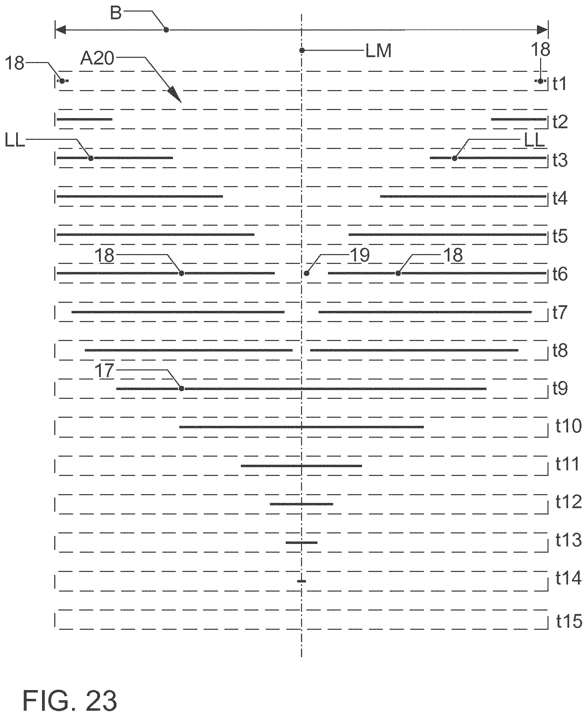

Anhand der Fig. 22 und 23 werden nun Animationen beschrieben, die erzeugt werden, wenn der Fahrzeugführer durch Betätigen des Fahrstufen-Wählhebels einen Wechsel in der Fahrstufe vollführt.

So zeigt die Animation A19 eine Animation, welche ausgeführt wird, wenn der Fahrzeugführer die Fahrstufe "D" (Fahren) auswählt. Hierbei wird zunächst mittig zur Längsmittenachse des Kraftfahrzeugs eine mittige Lichtlinie 17 erzeugt, welche rasch zu einer maximalen Breite verbreitert wird, welche sich über einen Großteil der Breite B des Innenraums erstreckt (vergleiche Zeitpunkte t1 bis t6). Im Anschluss daran tut sich ein mittiger Abstand 19 auf, der die ursprünglich erzeugte, mittige Lichtlinie 17 in zwei außermittige Lichtlinien 18 trennt (vergleiche Zeitpunkt t7).

Der Abstand 19 wird daraufhin kontinuierlich vergrößert. Danach wandern auch die äußeren Lichtlinien 18 jeweils weiter nach außen. Dies erfolgt solange, bis die außermittigen Lichtlinien 18 aus dem Kraftfahrzeug K1 "herausgewandert" sind (vergleiche Zeitpunkte t8 bis t16).

Im Gegensatz dazu dient eine Animation A20 dazu, dem Fahrzeugführer zusätzlich mitzuteilen, dass er den Fahrstufen-Wählhebel auf R (Rückwärtsfahren) gestellt hat. Die Animation A20 erfolgt im Grunde genommen entgegengesetzt zur Animation A19. So wird zunächst am linken und am rechten äußeren Rand der Beleuchtungsvorrichtung 3 jeweils eine außermittige Lichtlinie 18 erzeugt, deren Breite kontinuierlich vergrößert wird, so dass schließlich nur noch ein kleinerer Abstand 19 zwischen den außermittigen Lichtlinien 18 besteht (vergleiche Zeitpunkte t1 bis t6). Im Anschluss daran wird der Abstand 19 zwischen den außermittigen Lichtlinien 18 weiter verringert. Gleichzeitig wird auch die Breite der Lichtlinien 18 etwas verringert. Dies erfolgt solange, bis die außermittigen Lichtlinien 18 zu einer mittigen Lichtlinie 17 verschmelzen (vergleiche Zeitpunkt t9). Im Anschluss daran wird die Breite der mittigen Lichtlinie 17 kontinuierlich verkleinert, solange bis diese ganz verschwindet (vergleiche Zeitpunkte t10 bis t15).

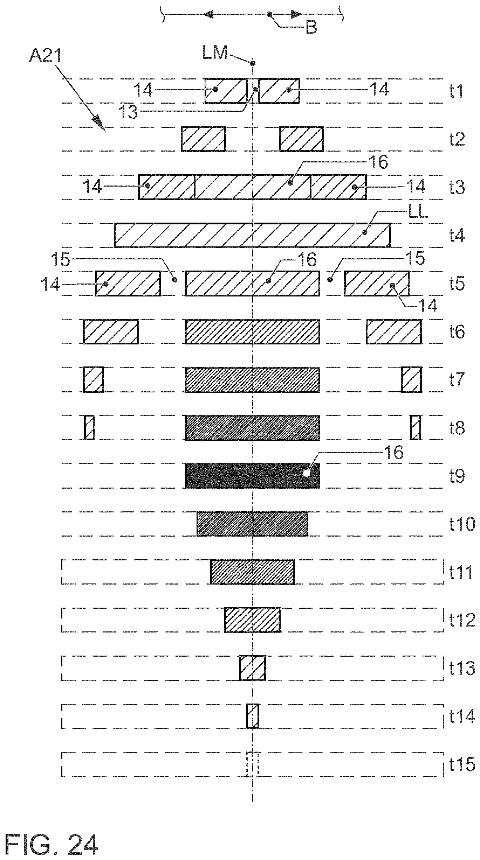

Die Fig. 24 beschreibt wiederum eine Animation A21, welche in Zusammenhang mit einem Welcome-Szenario verwendet werden kann. So wird zunächst eine mittig zur Längsmittenebene LM des Kraftfahrzeugs ausgerichtete Lichtlinie erzeugt, welche aus zwei äußeren, durch einen sichtbaren Abstand 13 getrennten Lichtlinien 14 besteht. Die Lichtlinien 14 weisen eine reduzierte Helligkeit auf. Anschließend werden der Abstand 13 der Lichtlinien 14 und auch deren Breite etwas vergrößert. Im Verlauf der Animation wird in den Abstand 13 eine innere Lichtlinie 16 eingeblendet. Dies erfolgt so lange, bis deren Helligkeit mit derjenigen der äußeren Lichtlinien 14 übereinstimmt und somit die Lichtlinien 14 und die Lichtlinie 16 optisch miteinander verschmelzen (Zeitpunkt t4). Im Anschluss daran wird die so entstandene Lichtlinie wieder aufgeteilt. Es trennen sich zwei äußere Lichtlinien 14 wieder von einer inneren Lichtlinie 16 durch Abstände 15 ab (vergleiche Zeitpunkt t5). Im weiteren Verlauf rücken die äußeren Lichtlinien 14 noch etwas nach außen, wobei gleichzeitig die Abstände 15 solange vergrößert und die Lichtlinien 14 solange von innen ausgehend in ihrer Breite verringert werden, bis die äußeren Lichtlinien 14 verschwinden. Die Breite der inneren Lichtlinie 16 bleibt indes gleich, wobei deren Helligkeit bis auf ein Maximum erhöht wird (vergleiche Zeitpunkte t7 bis t9). Im Anschluss daran wird die Breite der Lichtlinie 16 kontinuierlich verkleinert, bis auch diese verschwindet. Gleichzeitig wird auch die Helligkeit kontinuierlich reduziert (vergleiche Zeitpunkte t10 bis t15).

Die Animation A21 wird mit den in den Zeitpunkten t1 bis t15 gezeigten Schritten solange wiederholt, bis der Standby-Zustand endet. Ein Standby-Zustand des Kraftfahrzeugs K1 kann sich beispielsweise dann einstellen, wenn der Fahrzeugführer das Fahrzeug geöffnet hat und darauf gewartet wird, dass der Fahrzeugführer die Betriebsbremse betätigt und den Fahrstufen-Wählhebel einstellt.

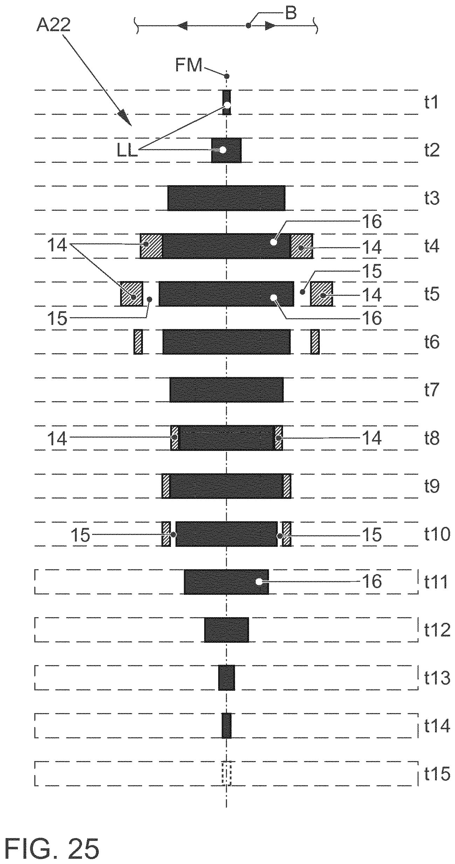

Wird von einem Infotainmentsystem ein ankommender Anruf festgestellt, so wird eine Animation A22 erzeugt, welche in Fig. 25 dargestellt ist. Hierbei wird zunächst eine zur Längsmittenebene FM der Fahrerseite zentrierte Lichtlinie LL geringer Breite erzeugt. Diese wird auf eine maximale Breite vergrößert, wobei gleichzeitig zwei äußere Lichtlinien 14 geringer Helligkeit eingeblendet werden. Die ursprünglich erzeugte Lichtlinie LL geht somit in eine innere Lichtlinie 16 über (vergleiche Zeitpunkte t1 bis t4). Im Anschluss daran werden Abstände 15 zwischen den äußeren Lichtlinien 14 und der inneren Lichtlinie 16 ausgebildet. Gleichzeitig wird auch die Breite der inneren Lichtlinie 16 etwas erhöht (vergleiche Zeitpunkt t5). Im Anschluss daran wird die Breite der inneren Lichtlinie 16 wieder verringert, was zu einer Vergrößerung der Abstände 15 führt. Gleichzeitig wird die Breite der äußeren Lichtlinien 14 von ihrem äußeren Ende ausgehend verringert. Dies erfolgt solange, bis die äußeren Lichtlinien 14 verschwinden (vergleiche Zeitpunkte t6 und t7).

Anschließend wird die Breite der inneren Lichtlinie 16 abermals etwas verringert, wobei gleichzeitig wiederum äußere Lichtlinien 14 mit geringerer Helligkeit eingebettet werden (Zeitpunkt t8). Es erfolgt danach noch einmal eine geringfügige Verbreiterung der inneren Lichtlinie 16, gefolgt von einer kontinuierlichen Verringerung der Breite, so dass die innere Lichtlinie 16 wieder durch Abstände 15 von den äußeren Lichtlinien 14 getrennt wird (Zeitpunkt t10). Eine weitere Verringerung der Breite der inneren Lichtlinie 16 wird mit einem Verschwinden der äußeren Lichtlinien 14 verbunden (Zeitpunkt t11). Schließlich wird die übrig gebliebene, innere Lichtlinie 16 ebenfalls kontinuierlich bis zu ihrem Verschwinden in ihrer Breite verringert (vergleiche Zeitpunkte t12 bis t15). Dabei ist denkbar, dass die im Zeitraum der Zeitpunkte t1 bis t7 ablaufende Teilanimation mit einem ersten Ton und die zwischen den Zeitpunkten t8 und t14 ablaufende Teilanimation mit einem zweiten Ton unterlegt wird, dessen Frequenz niedriger ist als die Frequenz des ersten Tons. Des Weiteren können bspw. die innere Lichtlinie 16 in grüner Farbe und die äußeren Lichtlinien 14 in weißer Farbe erzeugt werden.

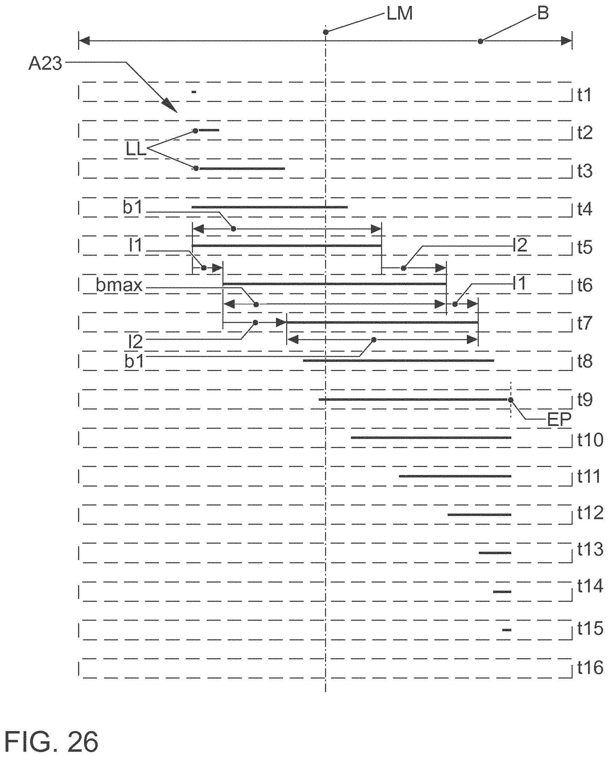

Anhand der nachfolgenden Figuren 26 bis 29 sollen mögliche Animationen beschrieben werden, die in Abhängigkeit von Daten bzw. vom Betriebszustand eines Navigationssystems erzeugt werden.

So zeigt die Fig. 26 eine Animation A23, welche zur Visualisierung einer Abbiegeaufforderung eines Navigationssystems erzeugt wird. Dabei wird links von der Längsmittenebene LM des Kraftfahrzeugs, in etwa auf Höhe des Fahrzeugführers eine kurze Lichtlinie LL erzeugt, welche kontinuierlich bis zu einer Breite b1 vergrößert wird, in der sie bereits über die Längsmittenebene LM reicht (vergleiche Zeitpunkte t1 bis t5). Zu einem weiteren Zeitpunkt verschiebt sich das linke Ende der Lichtlinie LL um eine Länge I1 nach rechts. Das rechte Ende der Lichtlinie LL verschiebt sich um eine Länge I2 nach rechts. Dabei ist die Länge I2 größer als die Länge I1. Hierdurch erreicht die Lichtlinie LL eine maximale Breite bmax. Zu einem späteren Zeitpunkt t7 verschiebt sich das linke Ende der Lichtlinie LL wiederum um die Länge I2 nach rechts und das rechte Ende der Lichtlinie LL um die Länge I1 nach rechts. Dies führt dazu, dass die Gesamtbreite der Lichtlinie LL wieder auf die Breite b1 zurückgeht. Im Anschluss daran verschiebt sich die Lichtlinie LL mit ihrer Breite b1 unverändert nach rechts, bis das rechte Ende der Lichtlinie LL eine Endposition EP erreicht (vergleiche Zeitpunkte t8 und t9). Danach wird die Breite der Lichtlinie LL von ihrem linken Ende her stetig verkürzt, solange, bis die Lichtlinie LL verschwindet (vergleiche Zeitpunkte t10 bis t16).

Dies führt optisch dazu, dass sich die Lichtlinie LL raupenartig von links nach rechts zu bewegen scheint. Die Animation A23 wird vorzugsweise dreimal wiederholt. Die Animation A23 kann beispielsweise eine Sprachausgabe des Navigationssystems, bevorzugt die Sprachausgabe "Jetzt rechts abbiegen!" unterstützen. Analog kann eine Animation nach links bewegend ausgestaltet sein, die eine Abbiegeaufforderung des Navigationssystems nach links unterstützt.

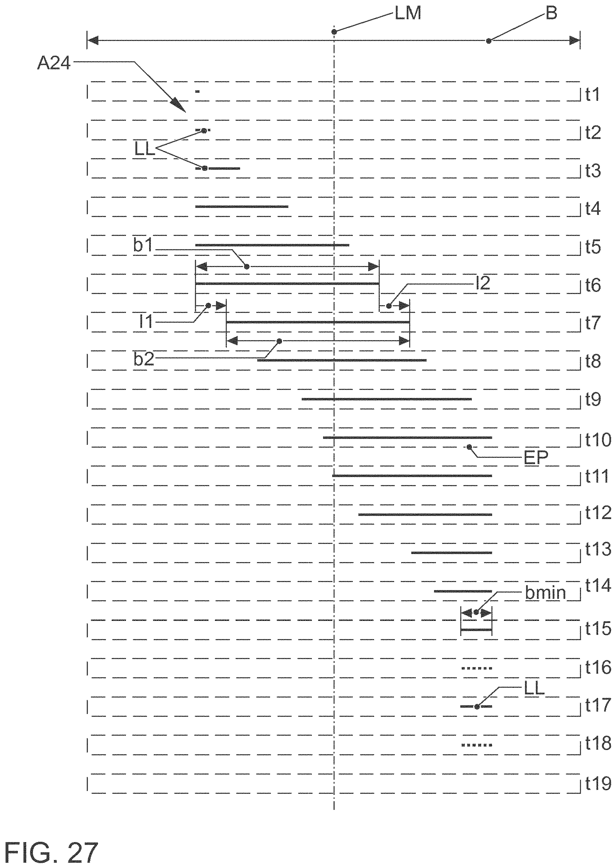

Die Fig. 27 zeigt eine Animation A24, welche zur Unterstützung einer erstmaligen Spurwechselaufforderung eines Navigationssystems erzeugt wird. Hierbei wird ebenfalls links von der Längsmittenebene LM des Kraftfahrzeugs, etwa auf Höhe der Fahrerseite, eine Lichtlinie LL erzeugt, welche auf Seite ihres rechten Endes kontinuierlich nach rechts bis zu einer Breite b1 verbreitert wird (vergleiche Zeitpunkte t1 bis t6). Zu einem späteren Zeitpunkt t7 wird das linke Ende der Lichtlinie um eine Länge I1 nach rechts verschoben und das rechte Ende um eine Länge I2. Dabei ist die Länge I1 länger als die Länge I2.

Dies führt zu einer geringfügigen Verringerung der Breite der Lichtlinie LL zu einer Breite b2 (vergleiche Zeitpunkt t7). Im Anschluss daran verschiebt sich die Lichtlinie LL in ihrer Gesamtheit und in ihrer Breite im Wesentlichen gleichbleibend solange nach rechts, bis ihr rechtes Ende einen Endpunkt EP erreicht (vergleiche Zeitpunkte t8 bis t10). Danach wird das linke Ende der Lichtlinie LL stetig nach rechts verschoben, bis die Lichtlinie LL eine kleinste Breite bmin aufweist (vergleiche Zeitpunkte t11 bis t15). Schließlich wird die Lichtlinie LL noch einmal kontinuierlich dunkler und wieder heller, bis sie danach ganz verschwindet (vergleiche Zeitpunkte t16 bis t19).

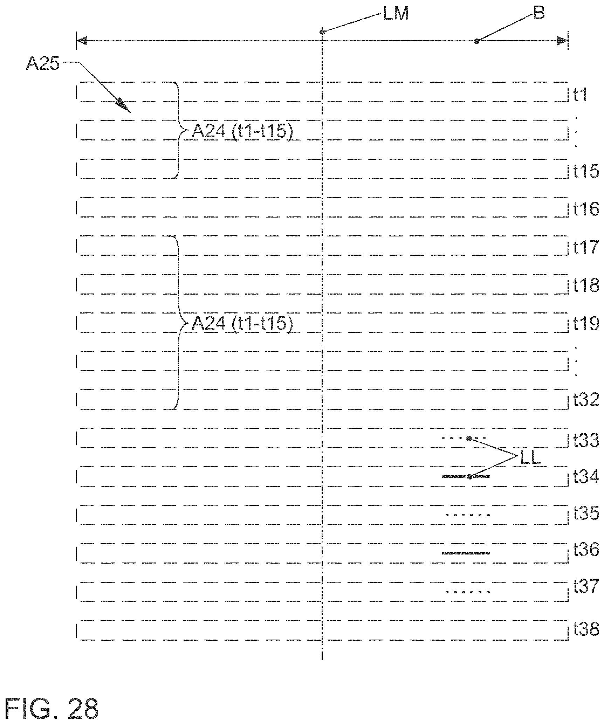

In der Fig. 28 ist eine Animation 25 dargestellt, die eine zweite Aufforderung des Navigationssystems zu einem Spurwechsel unterstützen soll. Hierbei läuft zunächst die zuvor beschriebene Animation A24 mit den dort in den Zeitpunkten t1 bis t15 gezeigten Phasen ab. Im Anschluss daran verschwindet die Lichtlinie (vergleiche Zeitpunkt t16). Danach wird die Animation 24 mit den in den Zeitpunkten t1 bis t15 gezeigten Phasen nochmals wiederholt (vergleiche Zeitpunkte t17 bis t32). Im Anschluss daran findet ein zweimaliger Wechsel von einer niedrigeren Helligkeit zu einer höheren Helligkeit der verbliebenen Lichtlinie LL statt, bevor diese endgültig verschwindet (vergleiche Zeitpunkte t33 bis t38).

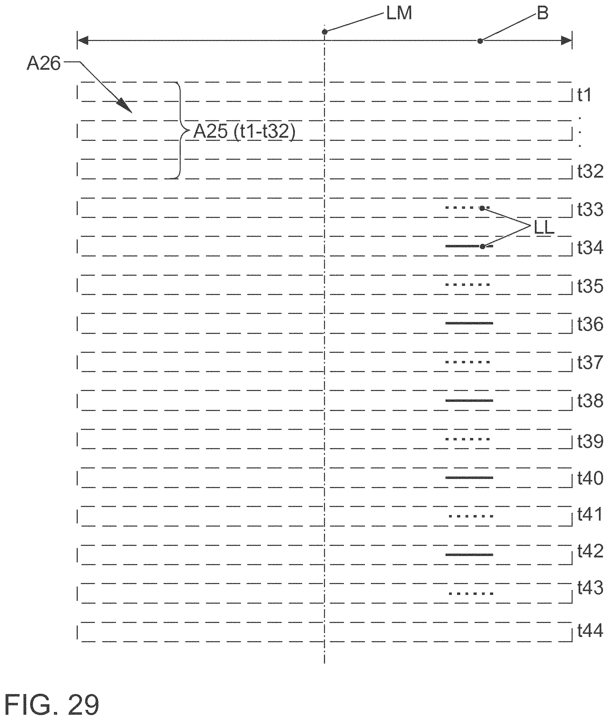

In der Fig. 29 wird nun schließlich eine Animation A26 erläutert, welche zur Unterstützung einer dritten Spurwechselaufforderung des Navigationssystems dienen soll. Bei dieser Animation wird zunächst die zuvor beschriebene Animation A25 in den dort zu den Zeitpunkten t1 bis t32 beschriebenen Phasen durchgeführt (vergleiche Zeitpunkte t1 bis t32). Im Anschluss daran erfolgt fünfmal ein Wechsel von einer niedrigeren Helligkeit der verbliebenen Lichtlinie LL zu einer höheren Helligkeit, bis diese danach endgültig ausgeblendet wird (vergleiche Zeitpunkte t33 bis t44).

Durch die erzeugten Animationen A24 bis A26 wird dem Fahrzeugführer also eine steigende Dringlichkeit des notwendigen Spurwechsels visualisiert.

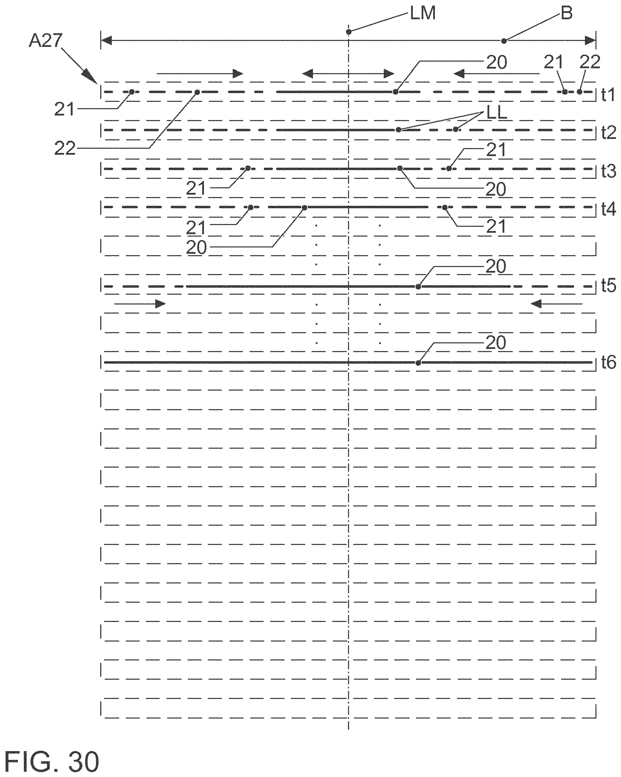

In der Fig. 30 wird eine Animation A27 vorgestellt, die zur Visualisierung eines Ladevorgangs einer Traktionsbatterie des Kraftfahrzeugs K1 denkbar ist, sofern das Kraftfahrzeug K1 als Plugin-Hybrid oder als reines Elektroauto ausgebildet ist.

Es ist ersichtlich, dass mit Beginn des Ladevorgangs (Zeitpunkt t1) eine sich über die gesamte Breite B oder nahezu die gesamte Breite B des Innenraums erstreckendes Lichterscheinungsbild erzeugt wird. Dieses weist zunächst eine zur Längsmittenebene LM des Kraftfahrzeugs mittige Lichtlinie 20 auf. Beidseitig der Lichtlinie 20 sind deutlich kleinere, außermittige Lichtlinien 21 vorhanden, welche sich langsam nach innen, also in Richtung auf die mittige Lichtlinie 20 bewegen (vergleiche Pfeile). Dies führt dazu, dass in regelmäßigen Abständen beidseitig der mittigen Lichtlinie 20 jeweils eine außermittige Lichtlinie 21 mit der mittigen Lichtlinie 20 zu verschmelzen scheint (vergleiche Zeitpunkt t4). Mit steigender Ladezeit verbreitert sich die mittige Lichtlinie 20, um den steigenden Ladestatus zu verdeutlichen (vergleiche Zeitpunkt t5). In voll aufgeladenem Zustand nimmt die Lichtlinie 20 die gesamte Breite B des Innenraums ein beziehungsweise erstreckt sich über die gesamte Beleuchtungsvorrichtung 3 (vergleiche Zeitpunkt t6). Hierbei ist darauf hinzuweisen, dass in Abweichung von den sonstigen Darstellungen die zeitlichen Abstände zwischen den aufeinander folgenden Zeitpunkten t4 und t5 sowie t5 und t6 wesentlich länger sind als die zeitlichen Abstände zwischen den einzelnen Zeitpunkten t1 bis t4.

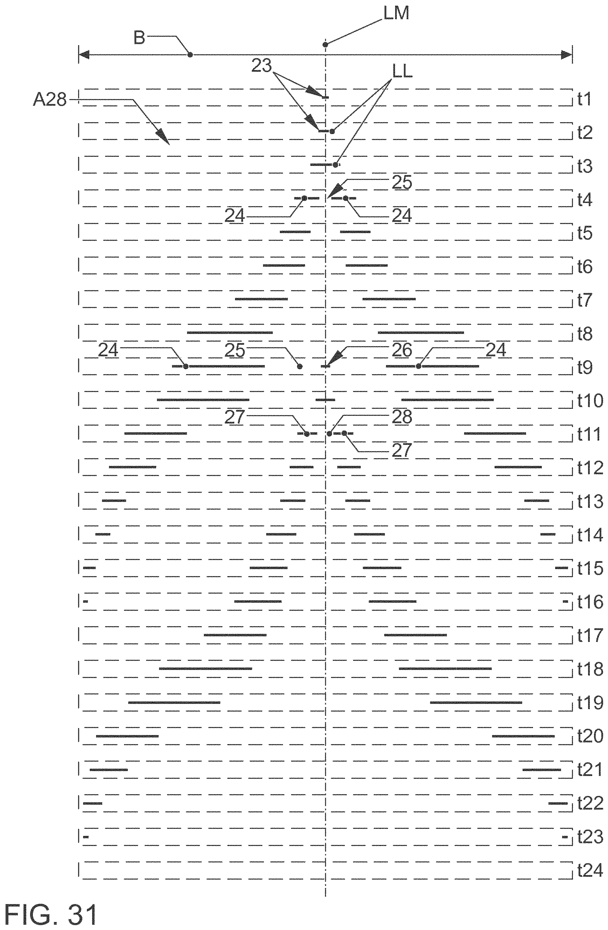

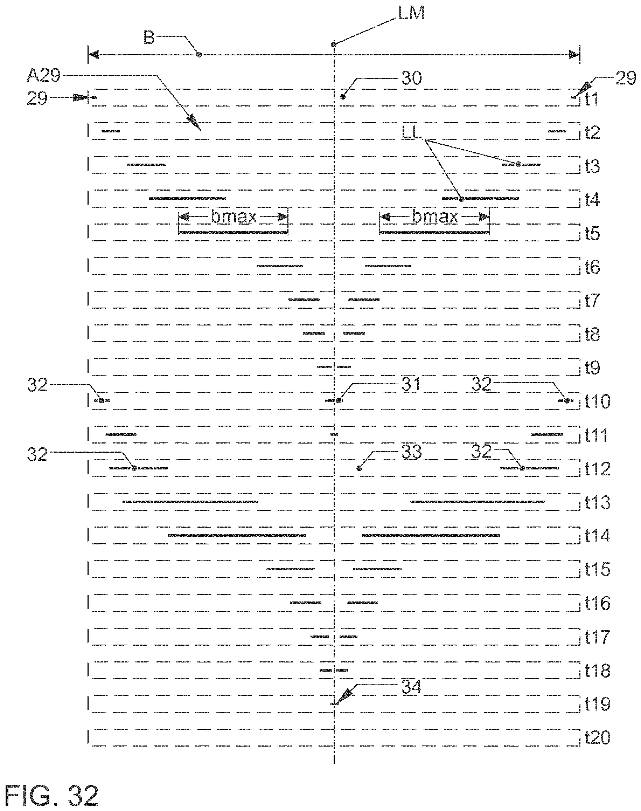

Anhand der Fig. 31 und 32 werden Animationen erläutert, welche zur Visualisierung eines Verriegelungszustands vom Kraftfahrzeug dienen. Sie können auch vorteilhaft Bestandteil einer Leaving-Home- und Coming-Home-Funktion eingesetzt werden.

So ist in Fig. 31 eine Animation 28 dargestellt, welche zur Visualisierung eines Entriegelungsvorgangs dient. Hierbei wird mittig zur Längsmittenebene LM des Kraftfahrzeugs zunächst eine mittige Lichtlinie 23 erzeugt, welche zunächst etwas verbreitert wird (Zeitpunkte t1 bis t3). Anschließend wird ein mittiger Abstand 25 ausgebildet, welcher die Lichtlinie 23 in zwei außermittige Lichtlinien 24 aufteilt (Zeitpunkt t4). Davon ausgehend wird der Abstand 25 weiter vergrößert. Auch die Breite der außermittigen Lichtlinien 24 wird etwas vergrößert (vergleiche Zeitpunkte t5 bis t8). Zu einem Zeitpunkt t9 entsteht im Abstand 25, also zwischen den Lichtlinien 24, eine weitere mittige Lichtlinie 26. Diese vergrößert sich geringfügig bis zu einem Zeitpunkt t11, zu dem die Lichtlinie 26 wiederum durch einen Abstand 28 in zwei außermittige Lichtlinien 27 aufgetrennt wird. Der Abstand 28 der Lichtlinien 27 vergrößert sich stetig, während die Lichtlinien 27 bis zu einem Zeitpunkt t19 stetig vergrößert werden. Nach Bildung der mittigen Lichtlinie 26 (Zeitpunkt t9) gehen jedoch die zuerst gebildeten, außermittigen Lichtlinien 24 in ihrer Breite wieder kontinuierlich zurück, bis sie zu beiden Seiten der Breite B verschwinden. Auch die später erzeugten Lichtlinien 27 gehen zunächst kontinuierlich auseinander, und vergrößern dabei ihre Breite (vergleiche Zeitpunkte t12 bis t19), bis auch diese wieder kontinuierlich in ihrer Breite verkleinert werden und schließlich im Randbereich verschwinden (vergleiche Zeitpunkte t20 bis t24).

In der Fig. 32 wird eine Animation A29 beschrieben. Diese Animation dient dazu, dem Fahrzeugführer visuell anzuzeigen, dass das Kraftfahrzeug verriegelt wurde. Auch hierbei verläuft die Animation A29 symmetrisch zur Längsmittenebene LM des Kraftfahrzeugs K1. So werden zunächst in den äußeren Randbereichen der Beleuchtungsvorrichtung 3 außermittige Lichtlinien 29 erzeugt. Diese Lichtlinien sind noch sehr kurz und werden kontinuierlich vergrößert. Dabei wandern die Lichtlinien 29 aufeinander zu, so dass sich ein zwischen ihnen ausgebildeter Abstand 30 ebenfalls kontinuierlich verringert. Dies geht solange weiter, bis die außermittigen Lichtlinien 29 jeweils eine maximale Breite bmax erreicht haben (vergleiche Zeitpunkte t1 bis t5). Anschließend wird die Breite der außermittigen Lichtlinien 29 beziehungsweise der Lichtlinien LL weiter kontinuierlich verringert und auch der Abstand 30. Dies erfolgt solange, bis die außermittigen Lichtlinien 29 zu einer mittigen Lichtlinie 31 verschmelzen und gleichzeitig in den Randbereichen der Beleuchtungsvorrichtung 3 neue außermittige Lichtlinien 32 entstehen (vergleiche Zeitpunkte t6 bis t10). Daraufhin wird die mittige Lichtlinie 31 kontinuierlich weiter verkleinert, bis sie verschwindet. Gleichzeitig wandern die außermittigen Lichtlinien 32 aufeinander zu, so dass sich ein Abstand 33 zwischen diesen verringert. Außerdem erfolgt eine kontinuierliche Vergrößerung der Lichtlinien 32 (vergleiche Zeitpunkte t11 und t12). Schließlich wandern die außermittigen Lichtlinien 32 immer weiter aufeinander zu, wobei sich deren Größe kontinuierlich verringert, solange bis die außermittigen Lichtlinien zu einer mittigen Lichtlinie 34 verschmelzen und diese verschwindet (vergleiche Zeitpunkte t13 bis t20).

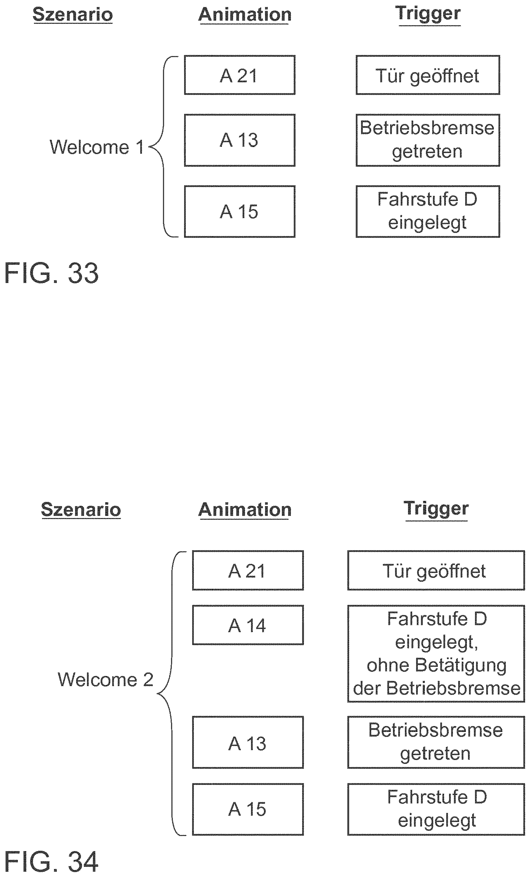

In der Fig. 33 ist nun ein mögliches Szenario erläutert, welches mit Hilfe von bereits beschriebenen Animationen realisiert werden kann. Es handelt sich um ein erstes, mögliches Welcome-Szenario Welcome 1, wobei in der mittleren Spalte die zugehörigen Animationen und in der rechten Spalte der für die jeweilige Animation verantwortliche Trigger genannt ist. So verdeutlicht die Animation A21 (vergleiche Fig. 24) einen Standby-Zustand des Kraftfahrzeugs, welches einem langsamen Atmen nachempfunden ist. Als Trigger ist denkbar, dass eine Tür, insbesondere die Fahrertür geöffnet wird beziehungsweise eine bestimmte Zeit (beispielsweise etwa zwei Sekunden) nach dem Öffnen der Tür vergangen ist. Sobald der Fahrzeugführer Platz genommen und als weiteren Trigger die Betriebsbremse betätigt hat, erscheint die Animation A13 (vergleiche Fig. 16). Diese weist den Fahrer auf einen weiteren, erfolgreichen Schritt zur Fahrzeugvorbereitung hin. Wenn der Fahrzeugführer anschließend den Fahrstufen-Wählhebel auf die Fahrstufe D (Fahren) positioniert, so dient dies als Trigger für die Erzeugung der Animation A15 (vergleiche Fig. 18). Der Fahrer erhält so die direkte Rückmeldung, dass sein Fahrzeug nun fahrbereit ist.

Als Abwandlung ist ein mögliches zweites Welcome-Szenario Welcome 2 in Fig. 34 dargestellt. Dabei wurde vom Fahrzeugführer nach dem Öffnen der Tür die Fahrstufe D angewählt, ohne jedoch die Betriebsbremse betätigt zu haben. Dies dient als Trigger zur Erzeugung der Animation A14 (vergleiche Fig. 17), welche den Fahrzeugführer darauf hinweist, dass er noch die Betriebsbremse betätigen muss. An die genannten Animationen schließen sich auch in diesem Szenario die Animation A13 beim Treten der Betriebsbremse und die Animation A15 beim Einlegen der Fahrstufe D an.

Bei der Vielzahl der möglichen Trigger für die Erzeugung von Animationen ist es notwendig, die einzelnen Funktionen bzw. Trigger zu priorisieren. Es ist zweckmäßig, ein Verfahren festzulegen, wie beim Auftreten von mehreren Triggern, was theoretisch zu einer notwendigen Überlagerung von ausgelösten Animationen führen würde, verfahren werden soll. Insbesondere gibt es zeitunkritische und zeitkritische Trigger. Ebenso können den den Animationen zu Grunde liegenden Triggern unterschiedliche Prioritäten zugewiesen werden.

Grundsätzlich ist es zweckmäßig, einem zeitkritischen Trigger auch eine hohe Priorität, wenn nicht sogar die höchste Priorität zuzurechnen.

So sollte beispielsweise einem Trigger, welcher in der Bremsaufforderung eines Fahrerassistenzsystems besteht, die höchste Priorität zugeordnet werden. Eine durch einen solchen Trigger ausgelöste Animation darf nicht unterbrechbar und auch nicht verzögerbar sein. Währenddessen kann einer Animation, welche durch einen Ladevorgang getriggert wird, eine niedrigere Priorität zugeordnet werden. Eine solche Animation kann verzögert und/oder durch einen Trigger höherer Priorität abgebrochen werden.

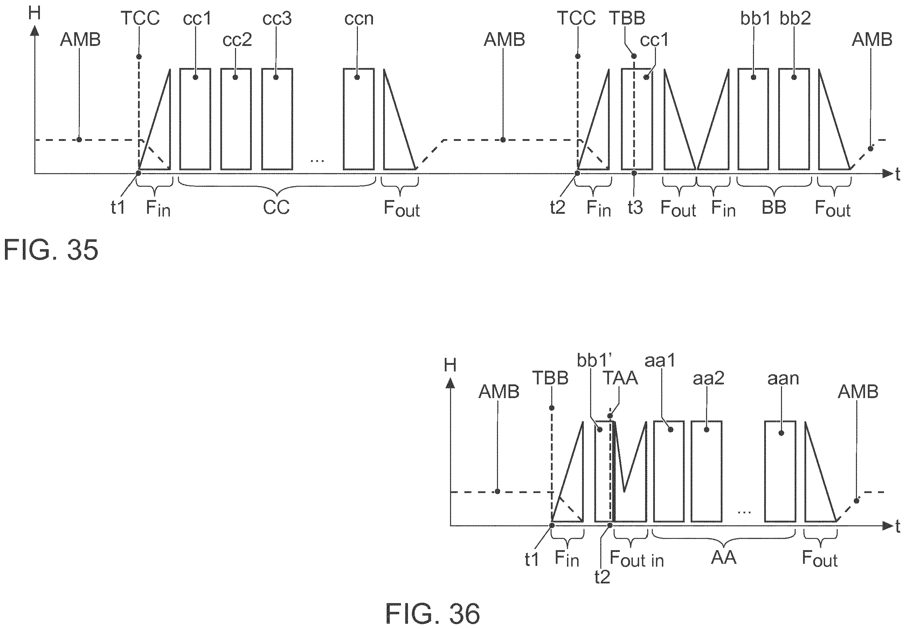

Anhand der Fig. 35 und 36 soll eine zweckmäßige Verfahrensweise zum Umgang mit Triggern unterschiedlicher Prioritäten beschrieben werden.

So ist in der Fig. 35 ein Ablauf dargestellt, bei dem auf der Hochachse eine Helligkeit einer Animation und auf der Querachse die Zeit t dargestellt sind. Mit AMB ist die Helligkeit einer Ambientebeleuchtung beziffert, welche ohne Auftreten einer Animation durch die Beleuchtungsvorrichtung 3 beziehungsweise durch die Beleuchtungsvorrichtung 4 abgegeben wird.

Zum Zeitpunkt t1 tritt ein Trigger TCC mit niedrigere Priorität auf, was dazu führt, dass ein Einblendverhalten (Fade in) Fin in eine Animation CC eingeleitet wird.

Danach wird die zum Trigger TCC zugehörige Animation CC mit Teilanimationen cc1 bis ccn durch entsprechende Ansteuerung der Leuchtmittel der Beleuchtungsvorrichtung 3 beziehungsweise 4 abgespielt. Am Ende der Animation CC findet ein Ausblendverhalten (Fade out) Fout der Animation CC statt. Anschließend wird die Helligkeit der Ambientebeleuchtung AMB wieder auf das normale Maß angehoben.

Weiter ist beispielhaft dargestellt, dass zu einem späteren Zeitpunkt t2 abermals der Trigger TCC auftritt. Hierbei findet zunächst wieder das Einblendverhalten Fin statt. Danach beginnt die Animation CC mit ihrer ersten Teilanimation cc1. Allerdings tritt während der Ausführung der ersten Teilanimation cc1 ein Trigger TBB einer mittleren, also höheren Priorität auf. Dies führt dazu, dass die Animation CC vorzeitig beendet wird. Allerdings wird noch die Teilanimation cc1 zu Ende geführt und mit einem üblichen Ausblendverhalten Fout abgeschlossen. Erst danach wird das Einblendverhalten Fin einer dem Trigger TBB zugeordneten Animation BB gestartet. Die Animation BB wird mit Teilanimationen bb1 und bb2 durchgeführt und anschließend mit einem Ausblendverhalten Fout beendet. Anschließend wird die Ambientebeleuchtung AMB in ihrer Helligkeit H wieder angehoben. Bei dem Trigger TBB handelt es sich um einen Trigger, welcher zwar eine höhere Priorität als der Trigger TCC aufweist, der jedoch nicht zeitkritisch ist. Daher wird in diesem Fall die laufende Animation nicht sofort, sondern zu einem sinnvollen Ende beendet und mit einem regulieren Ausblendverhalten abgeschlossen.

In Fig. 36 ist der Fall gezeigt, bei dem zu einem Zeitpunkt t1 zunächst ein Trigger TBB einer zeitunkritischen, aber höher priorisierten Funktion auftritt. Daraufhin wird die zugehörige Animation BB mit einem entsprechenden Einblendverhalten Fin gestartet. Anschließend beginnt die Animation BB mit einem Teil der ersten Animation bb1. Bevor die Animation bb1 jedoch beendet werden kann, tritt zum Zeitpunkt t2 ein Trigger TAA auf, der zu einer noch höher priorisierten und gleichzeitig auch zeitkritischen Funktion gehört. Daher wird zum Zeitpunkt t2 die laufende Teilanimation bb1 unverzüglich angebrochen, so dass eine abgebrochene Teilanimation bb1' vorliegt. Direkt daran anschließend wird eine zum Trigger TAA gehörige Animation AA durch Erzeugung einer generischen Blende Foutin (Fade out mit Fade in kombiniert) eingeleitet. Um möglichst wenig Zeit zu verlieren wird dabei also die bereits laufende Animation bb sofort abgebrochen und dabei mit einem generischen, sehr kurzen Fade out maskiert.

Im Anschluss daran startet die zeitkritische Animation AA mit den Teilanimationen aa1 bis aan. Die Animation AA wird mit einem Fade out Fout wieder abgeschlossen. Anschließend wird die Helligkeit der Ambientebeleuchtung AMB wieder auf das Normalmaß angehoben.

### Bezugszeichenliste

- 1: Cockpit
- 2: Türverkleidung
- 3: Beleuchtungsvorrichtung
- 4: Beleuchtungsvorrichtung
- 5: Auswerte- und Steuereinrichtung
- 6: Umfelderfassungseinrichtung
- 7: Fahrerassistenzsysteme
- 8: Betriebsdatenerfassungseinrichtung
- 9: Spracherkennungssystem, Sprachassistent
- 10: Lenkrad
- 11: Instrumententafel
- 12: Mittelkonsole
- 13: Abstand
- 14: äußere Lichtlinien
- 15: Abstände
- 16: innere Lichtlinie
- 17: mittige Lichtlinie
- 18: außermittige Lichtlinien
- 19: Abstand
- 20: mittige Lichtlinie
- 21: außermittige Lichtlinien
- 22: Abstände
- 23: mittige Lichtlinie
- 24: außermittige Lichtlinien
- 25: Abstand
- 26: mittige Lichtlinie
- 27: außermittige Lichtlinien
- 28: Abstand
- 29: außermittige Lichtlinien
- 30: Abstand
- 31: mittige Lichtlinie
- 32: außermittige Lichtlinien
- 33: Abstand
- 34: mittige Lichtlinie
- a: Ausschlag
- a1-a3: Ausschlag
- aa1-aan: Teilanimationen
- A1-A12: Animationen, getriggert durch den Zustand des Spracherkennungssystems
- A13, A14: Animationen, getriggert durch den Zustand der Betriebsbremse
- A16: Animation, getriggert durch den Zustand eines ACC-, PDC- oder Frontassist-Systems (Bremsaufforderung)
- A15, A17, A19, A20: Animationen, getriggert durch den Zustand des Fahrstufen-Wählhebels
- A18: Animation, getriggert durch den Zustand der Feststellbremse
- A21: Animation (Stand By)
- A22: Animation (eingehender Telefonanruf)
- A23-A26: Animationen, getriggert durch den Zustand des Navigationssystems
- A27: Animation (Batterie wird geladen)
- A28: Animation (Fahrzeug wird entriegelt)
- A29: Animation (Fahrzeug wird verriegelt)
- AA: Animation mit der höchsten Priorität A
- AMB: Ambientebeleuchtung
- b: Breite
- bb1, bb2: Teilanimationen
- bb1': abgebrochene Teilanimation
- b1, b2: Breite
- bmax: maximale Breite
- bmin: minimale Breite
- B: Breite des Innenraums
- BB: Animation mit einer mittleren Priorität B
- BM: Längsmittenebene der Beifahrerseite
- B1-B6: Betriebszustände des Spracherkennungssystems
- cc1-ccn: Teilanimationen
- C: Datenbus (CAN)
- CC: Animation mit der niedrigsten Priorität CC
- EP: Endposition
- Fin: Einblendverhalten einer Animation (Fade in)
- FM: Längsmittenebene der Fahrerseite
- Fout: Ausblendverhalten einer Animation (Fade out)
- Foutin: generische Blende (Fade out mit Fade in kombiniert)
- H: Helligkeit
- K1, K2: Kraftfahrzeug
- I1, I2: Länge
- LE: linkes Ende
- LE1-LE3: linkes Ende
- LL: Lichtlinien
- LM: Längsmittenebene vom Kraftfahrzeug
- M: Mittellinie
- R1-R4: Richtungen
- RE: rechtes Ende
- RE1-RE3: rechtes Ende
- SA1-SA3: Sprachausgaben des Spracherkennungssystems
- SE1, SE2: Spracheingaben
- SW: Scheibenwurzel
- t: Zeit
- t1-t14: Zeitpunkte
- TAA: Trigger für die Animation AA
- TBB: Trigger für die Animation BB
- TCC: Trigger für die Animation CC
- W: Wiederholung der Animation
- WS: Windschutzscheibe

## Patentansprüche

1. Verfahren zur Erzeugung eines Lichterscheinungsbildes im Innenraum eines Kraftfahrzeugs (K1, K2), wobei das Lichterscheinungsbild zumindest in Abhängigkeit von als Trigger (TAA, TBB, TCC)) wirkenden Betriebszuständen ((B1-B6) des Kraftfahrzeugs (K1, K2) und/oder Umfeldgrößen im Umfeld des Kraftfahrzeugs (K1, K2) erzeugt wird, wobei das Lichterscheinungsbild zumindest im Bereich des Cockpits (1) vom Kraftfahrzeug (K1, K2) in Form einer horizontal ausgerichteten, linienartigen Animation (A1-A29) erzeugt wird, wobei sich das Lichterscheinungsbild zumindest über einen Großteil der Breite des Cockpits (1) erstreckt oder zumindest über einen Großteil der Breite des Cockpits (1) entlang bewegt, das Lichterscheinungsbild als visuelle Begleitung einer Spracheingabe (SE1, SE2) eines Fahrzeuginsassen und optional einer fahrzeugseitigen Sprachausgabe (SA1-SA3) erzeugt wird, **dadurch gekennzeichnet, dass** das Lichterscheinungsbild vor demjenigen Fahrzeuginsassen erzeugt oder nach Erzeugung zu demjenigen Fahrzeuginsassen hinbewegt wird, der die Spracheingabe (SE1, SE2) abgibt oder abgegeben hat, wobei der als Trigger (TAA, TBB, TCC) wirkende Betriebszustand (B1-B6) von einem fahrzeugseitigen Spracherkennungssystem (9) stammt.

2. Verfahren nach Anspruch 1, **dadurch gekennzeichnet, dass** das Lichterscheinungsbild im Bereich einer Scheibenwurzel (SW) der Windschutzscheibe (WS) erzeugt wird.

3. Verfahren nach Anspruch 1, **dadurch gekennzeichnet, dass** das Lichterscheinungsbild im Bereich einer Instrumententafel (11) und im Bereich einer Türverkleidung (2) beider Vordertüren des Kraftfahrzeugs (K2) erzeugt wird.

4. Verfahren nach einem der vorangegangenen Ansprüche, **dadurch gekennzeichnet, dass** das Lichterscheinungsbild in unterschiedlichen Animationen (A1-A29) erzeugt wird, wobei jede Animation (A1-A29) jeweils einem bestimmten Trigger (TAA, TBB, TCC) zugeordnet ist.

5. Verfahren nach Anspruch 4, **dadurch gekennzeichnet, dass** das Spracherkennungssystem wenigstens Trigger zu dessen Betriebszuständen "Aktivieren", "Zuhören", "Verarbeiten", "Ausgeben", "Bestätigen", "Verneinen", "Freuen", "Stand By", "Hinweisen", "Warten", "Deaktivieren" und "Zuzwinkern" erzeugen kann.

6. Verfahren nach einem der vorhergehenden Ansprüche, **dadurch gekennzeichnet, dass** das Lichterscheinungsbild zur visuellen Unterstützung einer Welcome- und/oder Goodbye-Funktion des Kraftfahrzeugs (K1, K2) erzeugt wird.

7. Verfahren nach einem der vorhergehenden Ansprüche, **dadurch gekennzeichnet, dass** das Lichterscheinungsbild zur visuellen Unterstützung einer Coming-Home- und/oder einer Leaving-Home-Funktion des Kraftfahrzeugs (K1, K2) erzeugt wird.

8. Verfahren nach einem der vorhergehenden Ansprüche, **dadurch gekennzeichnet, dass** das Lichterscheinungsbild zur visuellen Unterstützung einer Bremsaufforderung eines Fahrerassistenzsystems (7) erzeugt wird.

9. Verfahren nach einem der vorhergehenden Ansprüche, **dadurch gekennzeichnet, dass** das Lichterscheinungsbild zur visuellen Unterstützung eines Fahrstufenwechsels erzeugt wird.

10. Verfahren nach einem der vorhergehenden Ansprüche, **dadurch gekennzeichnet, dass** das Lichterscheinungsbild zur visuellen Unterstützung einer Anweisung eines Navigationssystems erzeugt wird.

11. Verfahren nach Anspruch 10, **dadurch gekennzeichnet, dass** das Lichterscheinungsbild zur visuellen Unterstützung einer Spurwechsel-Anweisung erzeugt wird.

12. Verfahren nach Anspruch 10, **dadurch gekennzeichnet, dass** das Lichterscheinungsbild zur visuellen Unterstützung einer Abbiege-Anweisung erzeugt wird.

13. Verfahren nach einem der vorhergehenden Ansprüche, **dadurch gekennzeichnet, dass** das Lichterscheinungsbild zur visuellen Unterstützung eines eingehenden Telefonanrufs erzeugt wird.

14. Verfahren nach einem der vorhergehenden Ansprüche, **dadurch gekennzeichnet, dass** das Lichterscheinungsbild zur visuellen Unterstützung eines elektrischen Ladevorgangs einer Traktionsbatterie erzeugt wird.

15. Verfahren nach einem der vorhergehenden Ansprüche, **dadurch gekennzeichnet, dass** das Lichterscheinungsbild zur visuellen Unterstützung einer Warnmeldung für eine Geschwindigkeitsübertretung erzeugt wird.

16. Verfahren nach Anspruch 4, **dadurch gekennzeichnet, dass** jedem einer Animation zugeordneten Trigger (TAA, TBB, TCC) eine bestimmte Priorität zugewiesen wird, wobei der Eintritt eines Triggers (TBB) mit einer höheren Priorität als ein für eine laufende Animation (CC) ursächlicher Trigger (TCC) zu einem Ende der laufenden Animation (CC) und zu einem Start der dem höher priorisierten Trigger (TBB) zugeordnete Animation (BB) führt.

17. Verfahren nach Anspruch 16, **dadurch gekennzeichnet, dass** bei Auftreten eines höherpriorisierten, aber zeitunkritischen Triggers (TBB) eine laufende Animation (CC) nur in einer Teilanimation (cc1) durchgeführt wird, wobei die Animation (CC) jedoch mit ihrem üblichen Ausblendverhalten (Fout) beendet wird, bevor die dem höherpriorisierten Trigger (TBB) zugeordnete Animation (BB) gestartet wird.

18. Verfahren nach Anspruch 16 oder 17, **dadurch gekennzeichnet, dass** bei Auftreten eines höher priorisierten und zeitkritischen Triggers (TAA) eine laufende Animation (BB) sofort abgebrochen und der Übergang zu der dem höherpriorisierten Trigger (TAA) zugeordneten Animation (AA) durch eine generische Blende (Foutin) erfolgt.

19. Kraftfahrzeug (K1, K2) zur Durchführung des Verfahrens nach einem der vorhergehenden Ansprüche, mit wenigstens einer Beleuchtungsvorrichtung (3, 4) im Innenraum des Kraftfahrzeugs (K1, K2), mit einer Umfelderfassungseinrichtung (6) zur Erfassung des Fahrzeugumfeldes, mit wenigstens einem Fahrerassistenzsystem (7), mit einem Spracherkennungssystem (9) zur sprachgeführten Bedienung von Fahrzeugkomponenten und mit wenigstens einer Auswerte- und Steuereinrichtung (5) zur Ansteuerung der Beleuchtungsvorrichtung (3, 4), wobei die Beleuchtungsvorrichtung (3, 4) von der Auswerte- und Steuereinrichtung (5) zumindest in Abhängigkeit von Betriebszuständen (B1-B6) des Spracherkennungssystems (9), von Daten der Umfelderfassungseinrichtung (6) und/oder von Daten des wenigstens einen Fahrerassistenzsystems (7) ansteuerbar ist, und die Beleuchtungsvorrichtung (3, 4) als horizontal ausgerichteten linienartige Lichtleiste mit einer Vielzahl von nebeneinander angeordneten Leuchtmitteln ausgebildet ist, welche sich zumindest im Bereich des Cockpits (1) über die gesamte oder nahezu gesamte Breite des Innenraums erstreckt, wobei das Kraftfahrzeug (K1, K2) derart ausgebildet ist, ein Lichterscheinungsbild vor demjenigen Fahrzeuginsassen zu erzeugen oder nach Erzeugung zu demjenigen Fahrzeuginsassen hinzubewegen, der eine Spracheingabe (SE1, SE2) abgibt oder abgegeben hat, wobei ein als Trigger (TAA, TBB, TCC) wirkender Betriebszustand von dem fahrzeugseitigen Spracherkennungssystem (9) stammt.

20. Kraftfahrzeug (K1) nach Anspruch 19, **dadurch gekennzeichnet, dass** die Beleuchtungsvorrichtung (3) in einer Scheibenwurzel (SW) der Windschutzscheibe (WS) angeordnet ist.

21. Kraftfahrzeug (K2) nach Anspruch 19, **dadurch gekennzeichnet, dass** die Beleuchtungsvorrichtung (4) im Bereich einer Instrumententafel (11) angeordnet ist und sich beidseitig der Instrumententafel (11) im Bereich von Türverkleidungen (2) der Vordertüren in Richtung des Fahrzeughecks erstreckt.

## Claims

1. A method for generating a light appearance image in the interior of a motor vehicle (K1, K2), wherein the light appearance image is generated at least in dependence on operating conditions (B1-B6) of the motor vehicle (K1, K2) acting as a trigger (TAA, TBB, TCC) and/or environmental parameters in the environment of the motor vehicle (K1, K2), wherein the light appearance image is generated at least in the area of the cockpit (1) of the motor vehicle (K1, K2) in the form of a horizontally aligned, linear animation (A1-A29), wherein the light appearance image extends at least over a large part of the width of the cockpit (1) or moves at least along a large part of the width of the cockpit (1), the light appearance image is generated as a visual accompaniment of a voice input (SE1, SE2) of a vehicle occupant and optionally a vehicle-side voice output (SA1-SA3), **characterized in that** the light appearance image is generated in front of the occupant of the vehicle and after generation is moved towards the vehicle occupant, who makes or has made the voice input (SE1, SE2), wherein the operating condition (B1-B6) acting as a trigger (TAA, TBB, TCC) comes from a vehicle-side voice recognition system (9).

2. The method according to Claim 1, **characterized in that** the light appearance image is generated in the area of a disc root (SW) of the windshield (WS).

3. The method according to Claim 1, **characterized in that** the light appearance image is generated in the area of an instrument panel (11) and in the area of a door panel (2) of both front doors of the motor vehicle (K2).

4. The method according to any one of the preceding claims, **characterized in that** the light appearance image is generated in different animations (A1-A29), wherein each animation (1-A29) is assigned in each case to a specific trigger (TAA, TBB, TCC).

5. The method according to Claim 4, **characterized in that** the voice recognition system can generate at least triggers for its operating states "activate," "listen,", "process", "output," "confirm," "deny," "enjoy,", "stand by," "advise," "wait," "deactivate" and "wink."

6. The method according to any one of the preceding claims, **characterized in that** the light appearance image is generated for the visual support of a welcome- and/or goodbye function of the motor vehicle (K1, K2).

7. The method according to any one of the preceding claims, **characterized in that** the light appearance image is generated for the visual support of a coming-home and/or a leaving-home function of the motor vehicle (K1, K2).

8. The method according to any one of the preceding claims, **characterized in that** the light appearance image is generated for the visual support of a braking demand of a driver assistance system (7).

9. The method according to any one of the preceding claims, **characterized in that** the light appearance image is generated for the visual support of a gear change.

10. The method according to any one of the preceding claims, **characterized in that** the light appearance image is generated for the visual support of an instruction of a navigation system.

11. The method according to Claim 10, **characterized in that** the light appearance image is generated for the visual support of a lane change instruction.

12. The method according to Claim 10, **characterized in that** the light appearance image is generated for the visual support of a turn instruction.

13. The method according to any one of the preceding claims, **characterized in that** the light appearance image is generated for the visual support of an incoming telephone call.

14. The method according to any one of the preceding claims, **characterized in that** the light appearance image is generated for the visual support of an electrical charging process of a traction battery.

15. The method according to any one of the preceding claims, **characterized in that** the light appearance image is generated for the visual support of a warning message for speeding.

16. The method according to Claim 4, **characterized in that** a specific priority is assigned to each trigger (TAA, TBB, TCC) assigned to an animation, wherein the occurrence of a trigger (TBB) with a higher priority than a trigger (TCC), which is causal for a running animation (CC), leads to an end of the running animation (CC) and to a start of the animation (BB) assigned to the more highly prioritized trigger (TBB).

17. The method according to Claim 16, **characterized in that** when a more highly prioritized, but temporally non-critical trigger (TBB) occurs, a running animation (CC) is only carried out in a partial animation (cc1), wherein the animation (CC) is, however, ended with its usual fade-out behavior (fout), before the animation (BB) assigned to the more highly prioritized trigger (TBB) is started.

18. The method according to Claim 16 or 17, **characterized in that** when a more highly prioritized and time-critical trigger (TAA) occurs, a running animation (BB) is immediately terminated and the transition to the animation (AA) assigned to the more highly prioritized trigger (TAA) is carried out through a generic aperture (foutin).

19. A motor vehicle (K1, K2) for carrying out the method according to any one of the preceding claims, with at least one lighting device (3, 4) in the interior of the motor vehicle (K1, K2), with an environment detection device (6) for detecting the environment of the vehicle, with at least one driver assistance system (7), with a voice recognition system (9) for the voice-guided operation of vehicle components and with at least one evaluation- and control device (5) for controlling the lighting device (3, 4), wherein the lighting device (3, 4) can be controlled by the evaluation- and control device (5) at least in dependence on operation conditions (B1-B6) of the voice recognition system (9), data of the environment detection device (6) and/or data of the at least one driver assistance system (7), and the lighting device (3, 4) is designed as a horizontally aligned linear lighting strip with a plurality of adjacently arranged lighting means, which extends at least in the area of the cockpit (1) over the entire or nearly entire width of the interior, wherein the motor vehicle (K1, K2) is designed in such a manner as to generate a light appearance image in front of the occupant of the vehicle or after generation to move towards the vehicle occupant, who makes or has made a voice input (SE1, SE2), wherein an operating condition acting as a trigger (TAA, TBB, TCC) comes from the vehicle-side voice recognition system (9).

20. The motor vehicle (K1) according to Claim 19, **characterized in that** the lighting device (3) is arranged in a disk root (SW) of the windshield (WS).

21. The motor vehicle (K2) according to Claim 19, **characterized in that** the lighting device (4) is arranged in the area of the instrument panel (11) and extends on both sides of the instrument panel (11) in the area of the door panels (2) of the front doors in the direction of the rear of the vehicle.

## Revendications

1. Procédé de génération d'une image de phénomène lumineux dans l'habitacle d'un véhicule automobile (K1, K2), l'image de phénomène lumineux étant générée au moins en fonction d'états de fonctionnement (B1 - B6) du véhicule automobile (K1, K2) agissant comme des déclencheurs (TAA, TBB, TCC) et/ou de grandeurs environnementales dans l'environnement du véhicule automobile (K1, K2), l'image de phénomène lumineux étant générée au moins au niveau du cockpit (1) du véhicule automobile (K1, K2) sous la forme d'une animation de forme linéaire orientée horizontalement (A1 - A29), l'image de phénomène lumineux s'étendant au moins sur la majeure partie de la largeur du cockpit (1) et se déplaçant au moins le long de la majeure partie de la largeur du cockpit (1), l'image de phénomène lumineux étant générée comme un accompagnement visuel d'une entrée vocale (SE1, SE2) d'un passager du véhicule et en option d'une sortie vocale (SA1 - SA3) provenant du véhicule, **caractérisé en ce que** l'image de phénomène lumineux est généré devant le passager du véhicule ou bien est déplacé, après la génération, vers le passager du véhicule qui émet ou a émis l'entrée vocale (SE1, SE2), l'état de fonctionnement (B1 - B6) agissant comme un déclencheur (TAA, TBB, TCC) provenant d'un système de reconnaissance vocale (9) du véhicule.

2. Procédé selon la revendication 1, **caractérisé en ce que** l'image de phénomène lumineux est générée au niveau d'une base (SW) du pare-brise (WS).

3. Procédé selon la revendication 1, **caractérisé en ce que** l'image de phénomène lumineux est générée au niveau d'un tableau de bord (11) et au niveau d'une garniture de portière (2) des deux portières avant du véhicule automobile (K2).

4. Procédé selon l'une des revendications précédentes, **caractérisé en ce que** l'image de phénomène lumineux est générée dans différentes animations (A1 - A29), chaque animation (A1 - A29) correspondant à un déclencheur (TAA, TBB, TCC) déterminé.

5. Procédé selon la revendication 4, **caractérisé en ce que** le système de reconnaissance vocale peut générer au moins des déclencheurs concernant à ses états de fonctionnement « activer », « écouter », « traiter », afficher », « confirmer », « refuser », « se réjouir », « veille », « signaler », « attendre », « désactiver » et « clin d'œil ».

6. Procédé selon l'une des revendications précédentes, **caractérisé en ce que** l'image de phénomène lumineux est générée pour le support visuel d'une fonction de bienvenue et/ou d'au-revoir du véhicule automobile (K1, K2).

7. Procédé selon l'une des revendications précédentes, **caractérisé en ce que** l'image de phénomène lumineux est générée pour le support visuel d'une fonction de retour à la maison et/ou d'une fonction de départ de la maison du véhicule automobile (K1, K2).

8. Procédé selon l'une des revendications précédentes, **caractérisé en ce que** l'image de phénomène lumineux est générée pour le support visuel d'une demande de freinage d'un système d'assistance au conducteur (7).

9. Procédé selon l'une des revendications précédentes, **caractérisé en ce que** l'image de phénomène lumineux est générée pour le support visuel d'un changement de régime de conduite.

10. Procédé selon l'une des revendications précédentes, **caractérisé en ce que** l'image de phénomène lumineux est générée pour le support visuel d'une instruction d'un système de navigation.

11. Procédé selon la revendication 10, **caractérisé en ce que** l'image de phénomène lumineux est générée pour le support visuel d'une instruction de changement de voie.

12. Procédé selon la revendication 10, **caractérisé en ce que** l'image de phénomène lumineux est générée pour le support visuel d'une instruction de bifurcation.

13. Procédé selon l'une des revendications précédentes, **caractérisé en ce que** l'image de phénomène lumineux est générée pour le support visuel d'un appel téléphonique entrant.

14. Procédé selon l'une des revendications précédentes, **caractérisé en ce que** l'image de phénomène lumineux est générée pour le support visuel d'un processus de charge électrique d'une batterie de traction.

15. Procédé selon l'une des revendications précédentes, **caractérisé en ce que** l'image de phénomène lumineux est générée pour le support visuel d'un message d'avertissement concernant un dépassement de vitesse.

16. Procédé selon la revendication 4, **caractérisé en ce que**, à chaque déclencheur (TAA, TBB, TCC) correspondant à une animation, est attribuée une priorité déterminée, la survenue d'un déclencheur (TBB) avec une priorité plus élevée qu'un déclencheur (TCC) initial pour une animation (CC) en cours conduisant à la fin de l'animation en cours (CC) et au démarrage de l'animation (BB) correspondant au déclencheur (TBB) de priorité plus élevée.

17. Procédé selon la revendication 16, **caractérisé en ce que**, lors de la survenue d'un déclencheur (TBB) de priorité plus élevée mais non urgent, une animation en cours (CC) n'est effectuée que dans une animation partielle (cc1), l'animation (CC) étant cependant terminée avec son comportement de disparition habituel (Fout) avant que l'animation (BB) correspondant au déclencheur (TBB) de priorité plus élevée ne soit démarrée.

18. Procédé selon la revendication 16 ou 17, **caractérisé en ce que**, lors de la survenue d'un déclencheur (TAA) de priorité plus élevée urgent, une animation en cours (BB) est immédiatement interrompue et la transition avec l'animation (AA) correspondant au déclencheur (TAA) de priorité plus élevée a lieu à l'aide d'un écran générique (Foutin).

19. Véhicule automobile (K1, K2) pour l'exécution du procédé selon l'une des revendications précédentes, avec au moins un dispositif d'éclairage (3, 4) dans l'habitacle du véhicule automobile (K1, K2), avec un dispositif de détection d'environnement (6) pour la détection de l'environnement du véhicule, avec au moins un système d'assistance au conducteur (7), avec un système de reconnaissance vocale (9) pour commande vocale de composants du véhicule et avec au moins un dispositif d'analyse et de commande (5) pour le contrôle du dispositif d'éclairage (3, 4), le dispositif d'éclairage (3, 4) pouvant être contrôlé par le dispositif d'analyse et de commande (5) au moins en fonction d'états de fonctionnement (B1 - B6) du système de reconnaissance vocale (9), des données du dispositif de détection d'environnement (6) et/ou des données de l'au moins un système d'assistance au conducteur (7) et le dispositif d'éclairage (3, 4) est conçu comme une barre lumineuse de forme linéaire orientée horizontalement, avec une pluralité de moyens d'éclairage juxtaposés, qui s'étend au moins au niveau du cockpit (1) sur toute ou sur presque toute la largeur de l'habitacle, le véhicule automobile (K1, K2) étant conçu pour générer une image de phénomène lumineux devant les passagers du véhicule ou pour se déplacer vers le passager du véhicule qui émet ou a émis une entrée vocale (SE1, SE2), un état de fonctionnement agissant comme un déclencheur (TAA, TBB, TCC) provenant du système de reconnaissance vocale (9) du véhicule.

20. Véhicule automobile (K1) selon la revendication 19, **caractérisé en ce que** le dispositif d'éclairage (3) est disposé à la base (SW) du pare-brise (WS).

21. Véhicule automobile (K2) selon la revendication 19, **caractérisé en ce que** le dispositif d'éclairage (4) est disposé au niveau d'un tableau de bord (11) et s'étend des deux côtés du tableau de bord (11) au niveau des garnitures de portières (2) des portières avant en direction de l'arrière du véhicule.
